# EUROPEAN PATENT APPLICATION

(11) **EP 4 391 482 A1**
(43) Date of publication of application: **26.06.2024**
(21) Application number: 22869152.3
(22) Date of filing: 09.09.2022
(51) Int. Cl.: H04L 45/741

(54) **METHOD, APPARATUS AND SYSTEM FOR ACQUIRING CAPABILITY, METHOD, APPARATUS AND SYSTEM FOR SENDING CAPABILITY INFORMATION, AND STORAGE MEDIUM**

(30) Priority: 16.09.2021 CN 202111085754; 10.12.2021 CN 202111508570
(71) Applicant: Huawei Technologies Co., Ltd., Shenzhen, Guangdong 518129 (CN)
(72) Inventor: PENG, Shuping, Shenzhen, Guangdong 518129 (CN); LI, Zhenbin, Shenzhen, Guangdong 518129 (CN)
(74) Representative: Gill Jennings & Every LLP
(86) International application number: PCT/CN2022/118240
(87) International publication number: WO 2023/040783

(57) **Abstract**

This application discloses a capability obtaining method, apparatus, and system, a capability information sending method and apparatus, and a storage medium, and belongs to the communication field. The method includes: A first device receives a first packet, where the first packet includes first capability information, and the first capability information indicates a processing capability of a first network device for an option in a packet header of an internet protocol version 6 IPv6 packet; and the first device determines the processing capability of the first network device based on the first capability information. In this application, service interruption can be avoided.

## Description

This application claims priority to Chinese Patent Application No. 202111085754.8, filed on September 16, 2021 and entitled "IPV6 EXTENSION HEADER OPTION CAPABILITY NOTIFICATION", which is incorporated herein by reference in its entirety. This application further claims priority to Chinese Patent Application No. 202111508570.8, filed on December 10, 2021 and entitled "CAPABILITY OBTAINING METHOD, APPARATUS, AND SYSTEM, CAPABILITY INFORMATION SENDING METHOD AND APPARATUS, AND STORAGE MEDIUM ", which is incorporated herein by reference in its entirety.

### TECHNICAL FIELD

This application relates to the communication field, and in particular, to a capability obtaining method, apparatus, and system, a capability information sending method and apparatus, and a storage medium.

### BACKGROUND

An internet protocol version 6 (internet protocol version 6, IPv6) packet includes one or more IPv6 extension headers. For any IPv6 extension header in the IPv6 packet, the IPv6 extension header includes one or more option (option) fields.

For an end-side device on a path, the end-side device generates a packet, where the packet includes an IPv6 extension header, and the IPv6 extension header includes one or more options, and then the packet is sent through the path.

For a network device through which the path passes, the network device receives the packet, but the network device may not have a processing capability for an option in the packet. In this case, the network device may discard the packet, and a service is interrupted.

### SUMMARY

This application provides a capability obtaining method, apparatus, and system, a capability information sending method and apparatus, and a storage medium, to avoid service interruption. The technical solutions are as follows.

According to a first aspect, this application provides a capability obtaining method. In the method, a first device receives a first packet, where the first packet includes first capability information, and the first capability information indicates a processing capability of a first network device for an option option in a packet header of an internet protocol version 6 IPv6 packet. The first device determines the processing capability of the first network device based on the first capability information. Because the first capability information in the first packet indicates a processing capability of the first network device for the option, the first device determines the processing capability of the first network device based on the first capability information. When sending a packet, the first device may send the packet with reference to the processing capability of the first network device. For example, sending a packet discarded by the first network device can be avoided, thereby avoiding service interruption.

In a possible implementation, the first device sends a second packet based on the processing capability of the first network device, where the second packet is an IPv6 packet. That the first device sends the second packet based on the processing capability of the first network device can avoid sending the packet discarded by the first network device. In this way, the first network device does not discard the second packet after receiving the second packet, thereby avoiding service interruption. Alternatively, the first device avoids to send the second packet discarded by the first network device to the first network device. In this way, the second packet does not pass through the first network device, and is not discarded by the first network device, thereby avoiding service interruption.

In another possible implementation, the first device sends the second packet to the first network device based on the processing capability of the first network device. In this case, the second packet is a packet according with the processing capability of the first network device, so as to avoid a case in which the first network device cannot process the second packet. In this way, the first network device does not discard the second packet after receiving the second packet, thereby avoiding service interruption.

In another possible implementation, a packet header of the second packet includes at least one first option, and the at least one first option is an option that the first network device is capable of processing. Specifically, the second packet may include each option that the first network device is capable of processing, so as to ensure that the first network device can identify a first option in the second packet, and the first network device does not discard the second packet after receiving the second packet.

In another possible implementation, the packet header of the second packet includes at least one second option, the at least one second option is an intersection set of options that a plurality of network devices on a forwarding path of the second packet are capable of processing, and the plurality of network devices include the first network device. Specifically, the option included in the second packet may be the intersection set of the options that the plurality of network devices on the forwarding path of the second packet are capable of processing. In this way, the plurality of network devices on the forwarding path can identify a second option in the second packet, and none of these network devices discards the second packet.

In another possible implementation, the packet header of the second packet includes a third option and a fourth option, the first network device is capable of processing the third option, the first network device is incapable of processing the fourth option, a second network device on the forwarding path of the second packet is capable of processing the fourth option, and the second network device is different from the first network device. Specifically, in some cases, the second packet may include an option that the first network device is incapable of processing but another network device on the forwarding path is capable of processing. For example, when it is expected that the first network device does not discard the second packet because the first network device is incapable of processing the option, the second packet may also carry an option that the first network device is incapable of processing.

In another possible implementation, the first device determines a path for transmission of the second packet based on the processing capability of the first network device. In other words, when calculating the forwarding path of the second packet, the first device may refer to a processing capability of a network device in a network topology, including but not limited to the processing capability of the first network device. In this way, a network device on a determined path is capable of processing an option in the second packet, and does not discard the second packet when the second packet is transmitted through the path.

In another possible implementation, the determined path passes through the first network device, and the first network device is capable of processing all options in the packet header of the second packet. In this way, the first network device can identify each option in the second packet, so that the first network device does not discard the second packet after receiving the second packet.

In another possible implementation, the determined path passes through the first network device, and the first network device is capable of processing at least one option in the packet header of the second packet. In this case, the first network device is capable of processing some options in the packet header of the second packet, and the second packet may alternatively include some options that the first network device is incapable of processing. For example, when it is expected that the first network device does not discard the second packet because the first network device is incapable of processing the option, the second packet may also carry an option that the first network device is incapable of processing.

In another possible implementation, the determined path does not pass through the first network device, and the first network device is incapable of processing the at least one option in the packet header of the second packet. In this case, when the first device performs path computation, because the first network device is incapable of processing all options in the packet header of the second packet, the forwarding path of the second packet does not pass through the first network device, and the first network device does not receive the second packet, avoiding the first network device to discard the second packet.

In another possible implementation, the first device sends a first capability information collection packet to the first network device, where the first packet is generated based on the first capability information collection packet. That is, the first device actively sends a capability information collection packet to the first network device, and the first network device sends capability information of the first network device to the first device based on the capability information collection packet. In this way, a manner of collecting capability information of a network device is more flexible and more targeted.

In another possible implementation, the first device sends a second capability information collection packet to a third network device. The first device obtains second capability information, where the second capability information indicates a processing capability of the third network device. That is, a capability information collection packet may be sent in a point-to-point manner, and different capability information collection packets are sent to different network devices.

In another possible implementation, the first capability information collection packet passes through the first network device and the third network device, the first packet further includes capability information of the third network device, and the capability information of the third network device indicates the processing capability of the third network device. That is, the capability information collection packet may be for a plurality of network devices along the forwarding path. In this case, capability information fed back by the plurality of network devices may be included in a same packet. For example, the first packet received by the first device may include processing capabilities of the plurality of network devices. In this way, the processing capabilities of the plurality of network devices are obtained by using one first capability information collection packet, thereby improving capability obtaining efficiency.

In another possible implementation, the first capability information collection packet passes through the first network device and the third network device, and the first capability information indicates an intersection set of the processing capability of the first network device and the processing capability of the third network device. When the capability information collection packet is for the plurality of network devices along the forwarding path, capability information fed back by the plurality of network devices may be included in a same packet. For example, the first capability information in the first packet received by the first device may be an intersection set of processing capabilities of the plurality of network devices. In this way, the processing capabilities of the plurality of network devices are obtained by using one first capability information collection packet, thereby improving capability obtaining efficiency.

In another possible implementation, the first capability information collection packet includes an option set, and the first capability information indicates a processing capability of the first network device for each option in the option set. The first capability information collection packet may include a specific option set, that is, a specified collection range. When feeding back the processing capability of the first network device, the first network device performs feedback only for the option range specified in the first capability information collection packet, so that capability information is collected and fed back more targeted and more efficiently.

In another possible implementation, the first device includes a device or a controller for encapsulating an IPv6 packet header, for example, a host device, a network edge device, or a network ingress device.

In another possible implementation, the first packet is generated by any one of the following devices: a controller, a first network device, a network edge device corresponding to the first device, or a management device corresponding to the first device.

In another possible implementation, a packet header of the IPv6 packet includes an IPv6 extension header, and the IPv6 extension header includes one or more of the following: a hop-by-hop options header HBH, a destination options header DOH, or a segment routing header SRH.

In another possible implementation, the first capability information includes at least one first option, and the first network device is capable of processing the at least one first option. A specific form of the first capability information may be directly listed options, and these options are options that the first network device is capable of processing.

In another possible implementation, the processing capability includes one or more of the following capabilities:
a type of an option that the first network device is capable of processing, a maximum quantity of options that the first network device is capable of processing, a processing operation that the first network device is capable of performing on a target option, a processing operation that the first network device is capable of performing on a packet that includes a target option, or a processing operation that the first network device is capable of performing on a packet that does not include a target option.

In another possible implementation, the first packet includes a type length value TLV field, and the TLV field includes the first capability information.

In another possible implementation, the first packet is a control packet or a data packet.

In another possible implementation, a communication protocol used for the first packet includes any one of the following: a border gateway protocol-link state BGP-LS, an interior gateway protocol IGP, a path computation element protocol PECP, and a network configuration protocol NETCONF.

According to a second aspect, this application provides a capability information sending method. In the method, a first network device sends a first packet, where the first packet includes first capability information, and the first capability information indicates a processing capability of the first network device for an option option field in a packet header of an internet protocol version 6 IPv6 packet. Because the first capability information in the first packet indicates the processing capability of the first network device for the option, for a device that receives the first packet, the device determines the processing capability of the first network device based on the first capability information. When sending a packet, the device may send the packet with reference to the processing capability of the first network device. For example, sending a packet discarded by the first network device can be avoided, thereby avoiding service interruption.

In a possible implementation, the first network device receives a first capability information collection packet. The first network device generates the first packet based on the first capability information collection packet. In this way, by actively sending a capability information collection packet to the first network device, the first network device sends capability information of the first network device based on the capability information collection packet. In this way, a manner of collecting capability information of a network device is more flexible and more targeted.

In a possible implementation, the first capability information collection packet includes an option set. The first network device generates the first packet based on the processing capability of the first network device for each option in the option set, where the first capability information indicates the processing capability of the first network device for each option in the option set. In this way, for a device receiving the first packet, the device encapsulates a second packet based on the processing capability of the first network device for each option in the option set, the option in the second packet can be identified by the first network device, and the first network device does not discard the second packet. In addition, the first capability information collection packet may include a specific option set, that is, a specified collection range. When feeding back the processing capability of the first network device, the first network device performs feedback only for the option range specified in the first capability information collection packet, so that capability information is collected and fed back more targeted and more efficiently.

In another possible implementation, the first network device receives the second packet, where the second packet includes second capability information, and the second capability information indicates a processing capability of a second network device for an option field in a packet header of an IPv6 packet; the first network device generates the first packet based on the second packet. The first packet further includes the second capability information, or the first capability information indicates an intersection set of the processing capability of the first network device for the option field in the packet header of the IPv6 packet and the processing capability of the second network device for the option field in the packet header of the IPv6 packet. That is, when the capability information collection packet is for a plurality of network devices along a forwarding path, capability information fed back by the plurality of network devices may be included in a same packet. In this way, processing capabilities of the plurality of network devices are obtained by using one first capability information collection packet, thereby improving capability obtaining efficiency.

In another possible implementation, the first network device determines the first capability information based on at least one first option that the first network device is capable of processing, where the first capability information includes the at least one first option. A specific form of the first capability information may be directly listed options, and these options are options that the first network device is capable of processing.

In another possible implementation, the processing capability includes one or more of the following capabilities:
a type of an option that the first network device is capable of processing, a maximum quantity of options that the first network device is capable of processing, a processing operation that the first network device is capable of performing on a target option, a processing operation that the first network device is capable of performing on a packet that includes a target option, or a processing operation that the first network device is capable of performing on a packet that does not include a target option.

In another possible implementation, the first packet includes a type length value TLV field, and the TLV field includes the first capability information.

In another possible implementation, the first packet is a control packet or a data packet.

In another possible implementation, a communication protocol used for the first packet includes any one of the following: a border gateway protocol-link state BGP-LS, an interior gateway protocol IGP, a path computation element protocol PECP, and a network configuration protocol NETCONF.

In another possible implementation, a packet header of the IPv6 packet includes an IPv6 extension header, and the IPv6 extension header includes one or more of the following: a hop-by-hop options header HBH, a destination options header DOH, or a segment routing header SRH.

According to a third aspect, this application provides a capability obtaining apparatus, where the apparatus includes a receiving unit and a processing unit.

The receiving unit is configured to receive a first packet, where the first packet includes first capability information, and the first capability information indicates a processing capability of a first network device for an option option in a packet header of an internet protocol version 6 IPv6 packet.

The processing unit is configured to determine the processing capability of the first network device based on the first capability information.

Because the first capability information in the first packet received by the receiving unit indicates a processing capability of the first network device for the option, the processing unit determines the processing capability of the first network device based on the first capability information. When sending a packet, the packet may be sent with reference to the processing capability of the first network device. For example, sending a packet discarded by the first network device can be avoided, thereby avoiding service interruption.

In a possible implementation, a first sending unit is configured to send a second packet based on the processing capability of the first network device, where the second packet is an IPv6 packet. That the first sending unit sends the second packet based on the processing capability of the first network device can avoid sending the packet discarded by the first network device. In this way, the first network device does not discard the second packet after receiving the second packet, thereby avoiding service interruption. Alternatively, the first sending unit avoids to send the second packet discarded by the first network device to the first network device. In this way, the second packet does not pass through the first network device, and is not discarded by the first network device, thereby avoiding service interruption.

In another possible implementation, the first sending unit is configured to send the second packet to the first network device based on the processing capability of the first network device. In this case, the second packet is a packet according with the processing capability of the first network device, so as to avoid a case in which the first network device cannot process the second packet. In this way, the first network device does not discard the second packet after receiving the second packet, thereby avoiding service interruption.

In another possible implementation, a packet header of the second packet includes at least one first option, and the at least one first option is an option that the first network device is capable of processing. Specifically, the second packet may include each option that the first network device is capable of processing, so as to ensure that the first network device can identify a first option in the second packet, and the first network device does not discard the second packet after receiving the second packet.

In another possible implementation, the packet header of the second packet includes at least one second option, the at least one second option is an intersection set of options that a plurality of network devices on a forwarding path of the second packet are capable of processing, and the plurality of network devices include the first network device. Specifically, the option included in the second packet may be the intersection set of the options that the plurality of network devices on the forwarding path of the second packet are capable of processing. In this way, the plurality of network devices on the forwarding path can identify a second option in the second packet, and none of these network devices discards the second packet.

In another possible implementation, the packet header of the second packet includes a third option and a fourth option, the first network device is capable of processing the third option, the first network device is incapable of processing the fourth option, a second network device on the forwarding path of the second packet is capable of processing the fourth option, and the second network device is different from the first network device. Specifically, in some cases, the second packet may include an option that the first network device is incapable of processing but another network device on the forwarding path is capable of processing. For example, when it is expected that the first network device does not discard the second packet because the first network device is incapable of processing the option, the second packet may also carry an option that the first network device is incapable of processing.

In another possible implementation, the processing unit is further configured to determine a path for transmission of the second packet based on the processing capability of the first network device. In other words, when calculating the forwarding path of the second packet, the first device may refer to a processing capability of a network device in a network topology, including but not limited to the processing capability of the first network device. In this way, a network device on a determined path is capable of processing an option in the second packet, and does not discard the second packet when the second packet is transmitted through the path.

In another possible implementation, the determined path passes through the first network device, and the first network device is capable of processing all options in the packet header of the second packet. In this way, the first network device can identify each option in the second packet, so that the first network device does not discard the second packet after receiving the second packet.

In another possible implementation, the determined path passes through the first network device, and the first network device is capable of processing at least one option in the packet header of the second packet. In this case, the first network device is capable of processing some options in the packet header of the second packet, and the second packet may also include some options that the first network device is incapable of processing. For example, when it is expected that the first network device does not discard the second packet because the first network device is incapable of processing the option, the second packet may also carry an option that the first network device is incapable of processing.

In another possible implementation, the determined path passes through the first network device, and the first network device is incapable of processing the at least one option in the packet header of the second packet. In this case, when the first device performs path computation, because the first network device is incapable of processing all options in the packet header of the second packet, the forwarding path of the second packet does not pass through the first network device, and the first network device does not receive the second packet, avoiding the first network device to discard the second packet.

In another possible implementation, the apparatus further includes a second sending unit, configured to send a first capability information collection packet to the first network device, where the first packet is generated based on the first capability information collection packet. That is, the first device actively sends a capability information collection packet to the first network device, and the first network device sends capability information of the first network device to the first device based on the capability information collection packet. In this way, a manner of collecting capability information of a network device is more flexible and more targeted.

In another possible implementation, the second sending unit is further configured to send a second capability information collection packet to a third network device. The processing unit is further configured to obtain second capability information, where the second capability information indicates a processing capability of the third network device. That is, a capability information collection packet may be sent in a point-to-point manner, and different capability information collection packets are sent to different network devices.

In another possible implementation, the first capability information collection packet passes through the first network device and the third network device, the first packet further includes capability information of the third network device, and the capability information of the third network device indicates the processing capability of the third network device. That is, the capability information collection packet may be for a plurality of network devices along the forwarding path. In this case, capability information fed back by the plurality of network devices may be included in a same packet. For example, the first packet received by the receiving unit may include processing capabilities of the plurality of network devices. In this way, the processing unit obtains the processing capabilities of the plurality of network devices by using one first capability information collection packet, thereby improving capability obtaining efficiency.

In another possible implementation, the first capability information collection packet passes through the first network device and the third network device. The first capability information indicates an intersection set of the processing capability of the first network device and the processing capability of the third network device. When the capability information collection packet is for the plurality of network devices along the forwarding path, capability information fed back by the plurality of network devices may be included in a same packet. For example, the first capability information in the first packet received by the first device may be an intersection set of processing capabilities of the plurality of network devices. In this way, the processing capabilities of the plurality of network devices are obtained by using one first capability information collection packet, thereby improving capability obtaining efficiency.

In another possible implementation, the first capability information collection packet includes an option set, and the first capability information indicates a processing capability of the first network device for each option in the option set. The first capability information collection packet can include a specific option set, that is, a specified collection range. When feeding back the processing capability of the first network device, the first network device performs feedback only for the option range specified in the first capability information collection packet, so that capability information is collected and fed back more targeted and more efficiently.

In another possible implementation, the apparatus includes a device or a controller for encapsulating an IPv6 packet header, for example, a host device, a network edge device, or a network ingress device.

In another possible implementation, the first packet is generated by any one of the following devices: a controller, a first network device, a network edge device corresponding to the first network device, or a management device corresponding to the apparatus.

In another possible implementation, a packet header of the IPv6 packet includes an IPv6 extension header, and the IPv6 extension header includes one or more of the following: a hop-by-hop options header HBH, a destination options header DOH, or a segment routing header SRH.

In another possible implementation, the first capability information includes at least one first option, and the first network device is capable of processing the at least one first option. A specific form of the first capability information may be directly listed options, and these options are options that the first network device is capable of processing.

In another possible implementation, the processing capability includes one or more of the following capabilities:
a type of an option that the first network device is capable of processing, a maximum quantity of options that the first network device is capable of processing, a processing operation that the first network device is capable of performing on a target option, a processing operation that the first network device is capable of performing on a packet that includes a target option, or a processing operation that the first network device is capable of performing on a packet that does not include a target option.

In another possible implementation, the first packet includes a type length value TLV field, and the TLV field includes the first capability information.

In another possible implementation, the first packet is a control packet or a data packet.

In another possible implementation, a communication protocol used for the first packet includes any one of the following: a border gateway protocol-link state BGP-LS, an interior gateway protocol IGP, a path computation element protocol PECP, and a network configuration protocol NETCONF.

According to a fourth aspect, this application provides a capability information sending apparatus, where the apparatus includes a sending unit.

The sending unit is configured to send a first packet, where the first packet includes first capability information, and the first capability information indicates a processing capability of the apparatus for an option option field in a packet header of an internet protocol version 6 IPv6 packet. Because the first capability information in the first packet indicates a processing capability of the apparatus for the option, for a device that receives the first packet, the device determines a processing capability of the apparatus based on the first capability information. When sending a packet, the device may send the packet with reference to the processing capability of the apparatus. For example, sending a packet discarded by the apparatus can be avoided, thereby avoiding service interruption.

In a possible implementation, the apparatus further includes: a receiving unit, configured to receive a first capability information collection packet; a first processing unit, configured to generate the first packet based on the first capability information collection packet. In this way, by actively sending a capability information collection packet to the apparatus, the sending unit sends capability information of the sending unit based on the capability information collection packet. In this way, a manner of collecting capability information of a network device is more flexible and more targeted.

In a possible implementation, the first capability information collection packet includes an option set. The first processing unit is configured to generate the first packet based on the processing capability of the apparatus for each option in the option set, where the first capability information indicates the processing capability of the apparatus for each option in the option set. In this way, for a device receiving the first packet, the device encapsulates a second packet based on the processing capability of the apparatus for each option in the option set, the option in the second packet can be identified by the first network device, and the first network device does not discard the second packet. In addition, the first capability information collection packet can include a specific option set, that is, a specified collection range. When feeding back a processing capability of the apparatus, the first network device performs feedback only for the option range specified in the first capability information collection packet, so that capability information is collected and fed back more targeted and more efficiently.

In another possible implementation, the receiving unit is configured to receive the second packet, where the second packet includes second capability information, and the second capability information indicates a processing capability of a second network device for an option field in a packet header of an IPv6 packet. The first processing unit is configured to generate the first packet based on the second packet. The first packet further includes the second capability information, or the first capability information indicates an intersection set of the processing capability of the apparatus for the option field in the packet header of the IPv6 packet and the processing capability of the second network device for the option field in the packet header of the IPv6 packet. That is, when the capability information collection packet is for a plurality of network devices along a forwarding path, capability information fed back by the plurality of network devices may be included in a same packet. In this way, processing capabilities of the plurality of network devices are obtained by using one first capability information collection packet, thereby improving capability obtaining efficiency.

In another possible implementation, the apparatus further includes: a second processing unit, configured to determine first capability information based on at least one first option that the apparatus is capable of processing, where the first capability information includes the at least one first option. A specific form of the first capability information may be directly listed options, and these options are options that the first network device is capable of processing.

In another possible implementation, the processing capability includes one or more of the following capabilities:
a type of an option that the apparatus is capable of processing, a maximum quantity of options that the apparatus is capable of processing, a processing operation that the apparatus is capable of performing on a target option, a processing operation that the apparatus is capable of performing on a packet that includes a target option, or a processing operation that the apparatus is capable of performing on a packet that does not include a target option.

In another possible implementation, the first packet includes a type length value TLV field, and the TLV field includes the first capability information.

In another possible implementation, the first packet is a control packet or a data packet.

In another possible implementation, a communication protocol used for the first packet includes any one of the following: a border gateway protocol-link state BGP-LS, an interior gateway protocol IGP, a path computation element protocol PECP, and a network configuration protocol NETCONF.

In another possible implementation, a packet header of the IPv6 packet includes an IPv6 extension header, and the IPv6 extension header includes one or more of the following: a hop-by-hop options header HBH, a destination options header DOH, or a segment routing header SRH.

According to a fifth aspect, this application provides a capability obtaining apparatus, where the apparatus includes a processor and a memory. The processor and the memory may be connected through an internal connection. The memory is configured to store a program, and the processor is configured to execute the program in the memory, to enable the apparatus to complete the method according to any one of the first aspect or the possible implementations of the first aspect.

According to a sixth aspect, this application provides a capability information sending apparatus, where the apparatus includes a processor and a memory. The processor and the memory may be connected through an internal connection. The memory is configured to store a program, and the processor is configured to execute the program in the memory, to enable the apparatus to complete the method according to any one of the second aspect or the possible implementations of the second aspect.

According to a seventh aspect, this application provides a network device. The network device includes a main control board and an interface board. The main control board includes: a first processor and a first memory. The interface board includes: a second processor, a second memory, and an interface card. The main control board and the interface board are coupled.

The first memory can be configured to store program code. The first processor is configured to invoke the program code in the first memory to perform the following operation: receiving a first packet, where the first packet includes first capability information, and the first capability information indicates a processing capability of a first network device for an option option in a packet header of an internet protocol version 6 IPv6 packet.

The second memory can be configured to store program code. The second processor is configured to invoke the program code in the second memory, to trigger the interface card to perform the following operation: determining the processing capability of the first network device based on the first capability information.

In a possible implementation, an inter-process communication (inter-process communication, IPC) channel is established between the main control board and the interface board, and the main control board and the interface board communicate with each other through an IPC channel.

According to an eighth aspect, this application provides a network device. The network device includes a main control board and an interface board. The main control board includes: a first processor and a first memory. The interface board includes: a second processor, a second memory, and an interface card. The main control board and the interface board are coupled.

The first memory may be configured to store program code. The first processor is configured to invoke the program code in the first memory to perform the following operation: sending a first packet, where the first packet includes first capability information, and the first capability information indicates a processing capability of a first network device for an option option field in a packet header of an internet protocol version 6 IPv6 packet.

The second memory may be configured to store program code. The second processor is configured to invoke the program code in the second memory, to trigger the interface card to perform a related operation.

In a possible implementation, an inter-process communication (inter-process communication, IPC) channel is established between the main control board and the interface board, and the main control board and the interface board communicate with each other through an IPC channel.

According to a ninth aspect, this application provides a capability obtaining system. The system includes the apparatus provided in the third aspect and the apparatus provided in the fourth aspect, or the system includes the apparatus provided in the fifth aspect and the apparatus provided in the sixth aspect, or the system includes the network device provided in the seventh aspect and the network device provided in the eighth aspect.

According to a tenth aspect, this application provides a computer program product. The computer program product includes a computer program stored in a computer-readable storage medium, and the computer program is loaded by a processor to implement the method according to any one of the first aspect, the second aspect, the possible implementations of the first aspect, or the possible implementations of the second aspect.

According to an eleventh aspect, this application provides a computer-readable storage medium, configured to store a computer program. The computer program is loaded by a processor to perform the method according to any one of the first aspect, the second aspect, the possible implementations of the first aspect, or the possible implementations of the second aspect.

According to a twelfth aspect, this application provides a chip, including a memory and a processor. The memory is configured to store computer instructions, and the processor is configured to invoke the computer instructions from the memory and run the computer instructions, to perform the method according to any one of the first aspect, the second aspect, the possible implementations of the first aspect, or the possible implementations of the second aspect.

According to a thirteenth aspect, this application provides a capability obtaining method. In the method, a first network device sends a first packet, where the first packet includes first capability information, and the first capability information indicates a processing capability of the first network device for an option option field in a packet header of an internet protocol version 6 IPv6 packet. A first device receives the first packet. The first device determines the processing capability of the first network device based on the first capability information in the first packet.

The first network device sends the first packet to the first device, where the first capability information in the first packet indicates the processing capability of the first network device for the option. In this way, the first device determines the processing capability of the first network device based on the first capability information. When sending a packet, the first device may send the packet with reference to the processing capability of the first network device. For example, sending a packet discarded by the first network device can be avoided, thereby avoiding service interruption.

According to a fourteenth aspect, this application provides a capability obtaining system. The system includes a first network device and a first device. The first network device is configured to send a first packet, where the first packet includes first capability information, and the first capability information indicates a processing capability of the first network device for an option option field in a packet header of an internet protocol version 6 IPv6 packet. The first device is configured to: receive the first packet; and determine the processing capability of the first network device based on the first capability information.

The first network device sends the first packet to the first device, where the first capability information in the first packet indicates the processing capability of the first network device for the option. In this way, the first device determines the processing capability of the first network device based on the first capability information. When sending a packet, the first device may send the packet with reference to the processing capability of the first network device. For example, sending a packet discarded by the first network device can be avoided, thereby avoiding service interruption.

### BRIEF DESCRIPTION OF DRAWINGS

FIG. 1 is a schematic diagram of a network architecture according to an embodiment of this application;
FIG. 2 is a schematic structural diagram of an IPv6 packet according to an embodiment of this application;
FIG. 3 is a schematic diagram of another network architecture according to an embodiment of this application;
FIG. 4 is a schematic diagram of another network architecture according to an embodiment of this application;
FIG. 5 is a flowchart of a capability obtaining method according to an embodiment of this application;
FIG. 6 is a schematic flowchart of obtaining capability information according to an embodiment of this application;
FIG. 7 is another schematic flowchart of obtaining capability information according to an embodiment of this application;
FIG. 8 is another schematic flowchart of obtaining capability information according to an embodiment of this application;
FIG. 9 is another schematic flowchart of obtaining capability information according to an embodiment of this application;
FIG. 10 is another schematic flowchart of obtaining capability information according to an embodiment of this application;
FIG. 11 is another schematic flowchart of obtaining capability information according to an embodiment of this application;
FIG. 12 is another schematic flowchart of obtaining capability information according to an embodiment of this application;
FIG. 13 is another schematic flowchart of obtaining capability information according to an embodiment of this application;
FIG. 14 is a schematic structural diagram of a capability obtaining apparatus according to an embodiment of this application;
FIG. 15 is a schematic structural diagram of a capability information sending apparatus according to an embodiment of this application;
FIG. 16 is a schematic structural diagram of another capability obtaining apparatus according to an embodiment of this application;
FIG. 17 is a schematic structural diagram of another capability information sending apparatus according to an embodiment of this application;
FIG. 18 is a schematic structural diagram of a device according to an embodiment of this application;
FIG. 19 is a schematic structural diagram of another device according to an embodiment of this application; and
FIG. 20 is a schematic structural diagram of a capability obtaining system according to an embodiment of this application.

### DESCRIPTION OF EMBODIMENTS

The following further describes in detail embodiments of this application with reference to accompanying drawings.

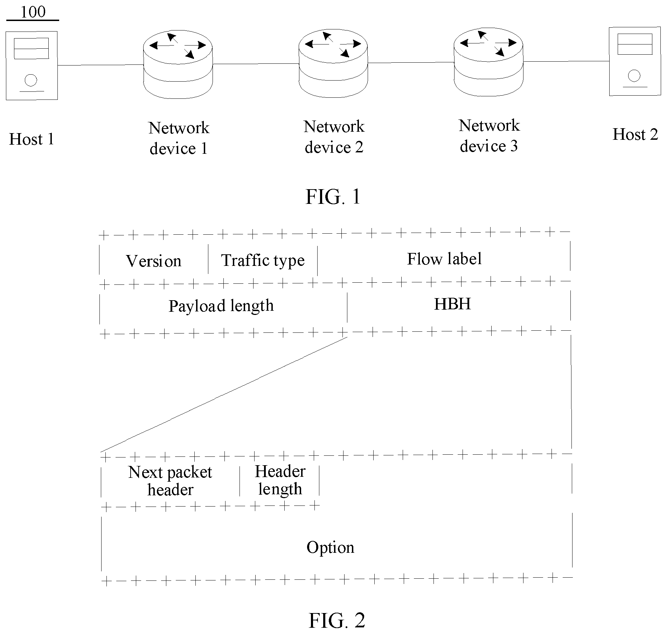

Referring to FIG. 1, an embodiment of this application provides a network architecture 100, including a plurality of hosts and a plurality of network devices. The plurality of network devices are devices in a communication network, for example, a router, a switch, or another forwarding device. For each host in the plurality of hosts, the host communicates with one or more network devices, so that the host accesses the communication network.

For example, FIG. 1 is used as an example. The plurality of hosts include a host 1 and a host 2, for example, a terminal device or a server device. The communication network includes a network device 1, a network device 2, and a network device 3. The host 1 communicates with the network device 1, and the host 2 communicates with the network device 3. In this way, the host 1 and the host 2 access the communication network. The network device 1 is a network edge device corresponding to the host 1, and the network device 3 is a network edge device corresponding to the host 2. Similarly, the network device 1 and the network device 3 are also network edge devices corresponding to the network device 2.

Referring to FIG. 1, the host 1 and the host 2 transmit a service over a first path. A device type of the host 1 is a terminal or a server, and a device type of the host 2 is a terminal or a server. For example, the host 1 is a terminal, and the host 2 is a server, or both the host 1 and the host 2 are terminals or servers. A device type of an endpoint device on the first path is a network device, that is, the endpoint device on the first path is not a host, but the host communicates with the endpoint device on the first path. In this way, the host may transmit a service over the first path.

In some embodiments, the first path is a path between the host 1 and the host 2, or the first path is a segment of a subpath in a path between the host 1 and the host 2. For example, referring to FIG. 1, a network device on the first path includes a network device 1, a network device 2, and a network device 3, endpoint devices on the first path are the network device 1 (a network edge device corresponding to the host 1 or the network device 2) and the network device 3 (a network edge device corresponding to the host 2 or the network device 2), and the first path is a path between the host 1 and the host 2. Alternatively, a network device on the first path includes a network device 2 and a network device 3, endpoint devices on the first path are the network device 2 and the network device 3, and the first path is a segment of a subpath in a path between the host 1 and the host 2.

In some embodiments, the first path is a tunnel or the like. Optionally, the first path is an IPv6 tunnel or the like. For example, the first path is a segment routing (Segment Routing, IPv6) SRv6 tunnel based on an IPv6 forwarding plane.

In some embodiments, a plurality of network devices included in the network architecture 100 are routing devices. For example, the network device 1, the network device 2, and the network device 3 are routing devices.

In some embodiments, the network device 1 and the network device 3 are network edge devices, configured to be accessed by a host. For example, both the network device 1 and the network device 3 are network side edge devices (provider edge, PE), so that the network device 1 can communicate with the host 1, and the network device 3 can communicate with the host 2.

It should be noted that in FIG. 1, an example in which the network device between the host 1 and the host 2 includes the network device 1, the network device 2, and the network device 3 is used, but this cannot be used as a limitation on the scope of the disclosure of the embodiments of this application. In an actual application, there may be less than the three network devices between the host 1 and the host 2, or there may be more than the three network devices between the host 1 and the host 2.

In some embodiments, the host 1 and the host 2 transmit an IPv6 packet through the first path. A packet header of the IPv6 packet includes an IPv6 packet header (IPv6 header) and at least one IPv6 extension header (IPv6 extension header). To be distinguished from the IPv6 extension header, the IPv6 packet header may also be referred to as an IPv6 basic header. An IPv6 extension header is also referred to as an extension header.

For example, refer to the IPv6 packet shown in FIG. 2. A format of an IPv6 packet header includes one or more of the following content: a version (version), a traffic type (traffic class), a flow label (flow label), a payload length (payload length), a source address or a destination address, and the like.

In some embodiments, the IPv6 extension header includes one or more of the following types: an internet protocol version 6 hop-by-hop options header (internet protocol version 6 hop-by-hop option header, HBH), a destination options header (internet protocol version 6 destination options header, DOH), a segment routing header (segment routing header, SRH), or the like. For each type of IPv6 extension header, the IPv6 extension header may include at least one option. An option is content of an IPv6 extension header and is usually encoded in the IPv6 extension header in the format of type length value (type length value, TLV). Referring to the IPv6 packet shown in FIG. 2, the IPv6 packet further includes an option. For example, the option is specifically an HBH. Taking the HBH as an example, a structure of the option is a type length value (type length value, TLV) structure, including an option type (option type) field, an option data length (option data length) field, and an option data (option data) field. The option type field is used to carry a type of an option, the option data length field is used to carry a length of the option, and the option data field is used to carry content of the option.

In some embodiments, the option included in the IPv6 extension header may include a router alert option (router alert option), a padding option (PAD option), or the like.

For the IPv6 packet, when the IPv6 packet is transmitted on the first path, the network device on the first path receives the IPv6 packet. The IPv6 packet includes at least one option. For each option, if the network device can identify the option, the network device processes the option. If the network device cannot identify the option, the network device reads content of the first two bits of an option type in the option, and determines a processing behavior based on the content of the two bits. For example, it is assumed that a network device on the first path is a router, the IPv6 packet includes a router alert option, and the network device can identify the router alert option. Therefore, when receiving the IPv6 packet, the network device can process the router alert option in the IPv6 packet. For another example, it is assumed that a network device on the first path is a switch, the IPv6 packet includes a router alert option, and the network device cannot identify the router alert option. Therefore, when receiving the IPv6 packet, the network device reads content of the first two bits of an option type in the router alert option, and determines a processing behavior based on the content of the two bits.

In some embodiments, if the content of the two bits is 00, a processing behavior for the option is: skipping. That is, the network device skips the option, and directly processes, in the IPv6 packet, a field following the option.

In some embodiments, if the content of the two bits is 01, a determined processing behavior is: discarding. That is, the network device directly discards the IPv6 packet.

In some embodiments, if the content of the two bits is 10 or 11, a determined processing behavior is: discarding and notifying a source device. That is, the network device directly discards the IPv6 packet, and sends an internet control message protocol (internet control message protocol, ICMP) announcement packet to the source device for the IPv6 packet, where the ICMP announcement packet is used to notify the source device of discarding the IPv6 packet.

It can be learned from the foregoing content that if the network device cannot identify an option in the IPv6 packet, the network device may directly discard the IPv6 packet, causing service interruption. In addition, for a packet encapsulation device, when sending a packet on a forwarding path, the device cannot predict which packet sent on the forwarding path can be discarded by a network device on the forwarding path, and cannot predict which network device on the forwarding path discards the packet when sending a packet on the forwarding path. To avoid this problem, for a device configured to encapsulate an IPv6 packet header, if the device obtains a processing capability of each network device for an option in an IPv6 packet, the device avoids selecting a path passing through the network device when selecting a path based on the obtained processing capability, or avoids encapsulating an option that cannot be identified by a network device on the first path when encapsulating the IPv6 packet header, where the first path is for transmission of the IPv6 packet, or based on an option in each to-be-sent packet and a processing capability of the network device on the forwarding path for the option, predicts a packet that may be discarded when the packet is transmitted on the forwarding path, or predicts a network device that may discard a packet when the packet is transmitted on the forwarding path, thereby resolving this problem.

Definitely, in addition to the processing capability of the network device for the option in the IPv6 extension header, the device may also obtain other capabilities of the network device. For example, the device further obtains a device power consumption management capability and/or a network performance statistics capability of the network device. In this way, a packet is targeted to be sent to the network.

The device configured to encapsulate the IPv6 packet header is a host, a network edge device, or an endpoint device on the first path. If the device configured to encapsulate the IPv6 packet header is a host, the host encapsulates to-be-sent data into an IPv6 packet. That is, the host uses the to-be-sent data as a payload of the IPv6 packet, and adds an IPv6 packet header to the payload to obtain the IPv6 packet. For example, referring to FIG. 1, it is assumed that the device configured to encapsulate the IPv6 packet header is the host 1. The host 1 encapsulates the to-be-sent data into an IPv6 packet, and sends the IPv6 packet on the first path.

If the device configured to encapsulate the IPv6 packet header is a network edge device or an endpoint device on the first path, the network edge device or the endpoint device receives a packet sent by a communication host of the network edge device or the endpoint device, and encapsulates the packet into an IPv6 packet. That is, the network edge device or the endpoint device uses the packet as a payload of the IPv6 packet, and adds an IPv6 packet header to the payload to obtain the IPv6 packet. For example, referring to FIG. 1, it is assumed that a device configured to encapsulate the IPv6 packet header is the network device 1. The host 1 sends a packet to the network device 1, and a payload of the packet includes data that needs to be sent by the host 1. The network device 1 adds the IPv6 packet header to the packet, so as to encapsulate the packet into an IPv6 packet and send the IPv6 packet.

A detailed process in which the host, the network edge device, or the endpoint device obtains the processing capability of each network device for the option is described in detail in a subsequent embodiment, and is not described in detail herein.

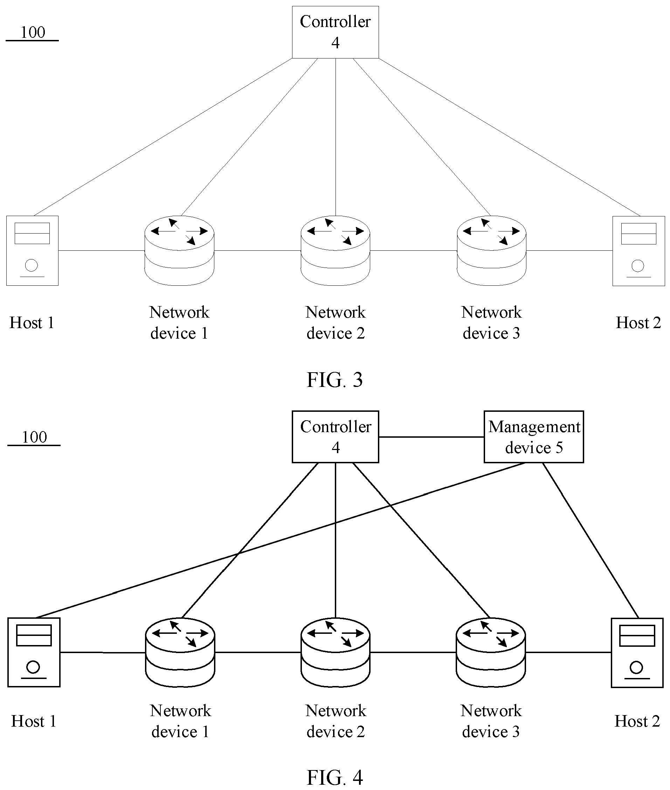

In some embodiments, referring to FIG. 3, a network architecture 100 further includes a controller 4. The controller 4 communicates with each network device in the network architecture 100, and the controller 4 communicates with each host in the network architecture 100.

The controller 4 may deliver configuration information and/or policy information and the like to each network device, and/or deliver configuration information and/or policy information and the like to each host. Each network device may report device status information and/or network status information and the like to the controller 4.

For example, referring to FIG. 3, the controller 4 communicates with a network device 1, a network device 2, and a network device 3, and the controller 4 communicates with a host 1 and a host 2. The controller 4 delivers configuration information and/or policy information and the like to the network device 1, the network device 2, and/or the network device 3, and/or the controller 4 delivers configuration information and/or policy information and/or the like to the host 1 and/or the host 2. The network device 1, the network device 2, and/or the network device 3 report their respective device status information and/or network status information to the controller 4.

In some embodiments, the controller 4 communicates with the network device in the network architecture 100 by using a control plane protocol. The control plane protocol includes one or more of the following protocols: a border gateway protocol link-state (border gateway protocol link-state, BGP-LS), an interior gateway protocol (interior gateway protocol, IGP), a path computation element protocol (path computation element protocol, PCEP), a network configuration protocol (NETCONF), or the like.

In some embodiments, the controller 4 and the host in the network architecture 100 may belong to different platforms, and the controller 4 cannot directly communicate with the host in the network architecture 100. To resolve this problem, referring to FIG. 4, the network architecture 100 further includes a management device 5, and the management device 5 communicates with the controller 4 and each host in the network architecture 100. That is, the controller 4 communicates with each host in the network architecture 100 via the management device 5.

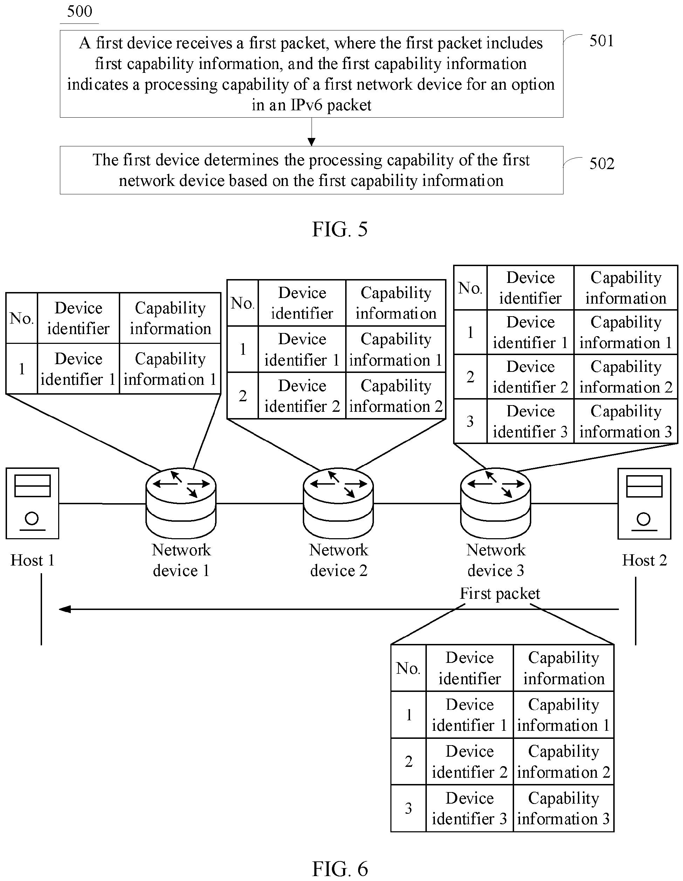

Referring to FIG. 5, an embodiment of this application provides a capability obtaining method 500. The method 500 is applied to the network architecture 100 shown in FIG. 1. In the method 500, for a device configured to encapsulate an IPv6 packet header, for ease of description, the device is referred to as a first device, and the first device collects capability information of a network device in the network architecture 100. For example, for the network device 1, the network device 2, and/or the network device 3 in the network architecture 100 shown in FIG. 1, the first device collects capability information of the network device 1, capability information of the network device 2, and/or capability information of the network device 3.

The first device is a device that encapsulates an IPv6 packet header. For example, the first device is a host (for example, the host 1 or the host 2 in the embodiment shown in FIG. 1) in the network architecture 100, or a network edge device; or the first device is an endpoint device on a first path, and the first path is a path through which the first device sends a packet. For example, the first device is the network device 1 in the embodiment shown in FIG. 1, and the network device 1 is an endpoint device on the first path and a network edge device (a network edge device corresponding to the host 1 or the network device 2); or the first device is the network device 3 in the embodiment shown in FIG. 1, and the network device 3 is another endpoint device on the first path and a network edge device (a network edge device corresponding to the host 2 or the network device 2). Referring to FIG. 5, the method 500 includes the following steps.

Step 501: A first device receives a first packet, where the first packet includes first capability information, and the first capability information indicates a processing capability of a first network device for an option in an IPv6 packet.

The first network device is any network device in the network architecture 100.

Optionally, the first network device is a network device on a first path. For example, referring to FIG. 1, the first path is a path between a host 1 and a host 2, a network device on the first path includes a network device 1, a network device 2, and a network device 3, and the first network device is the network device 1, the network device 2, or the network device 3. Alternatively, the first path is a subpath in the path between the host 1 and the host 2. For example, a network device on the first path includes a network device 1 and a network device 2, or a network device on the first path includes a network device 2 and a network device 3.

In step 501, the first device collects capability information of the first network device by receiving the first packet, where the capability information indicates a processing capability of the first network device for the option of the IPv6 packet.

The processing capability of the first network device includes one or more of the following capabilities:
a type of an option that the first network device is capable of processing, a maximum quantity of options that the first network device is capable of processing, a processing operation that the first network device is capable of performing on a target option, a processing operation that the first network device is capable of performing on a packet that includes a target option, or a processing operation that the first network device is capable of performing on a packet that does not include a target option. The target option is the specified option.

In some embodiments, the processing operation that the first network device is capable of performing on the target option is a user-defined processing operation. Optionally, the processing operation is different from a processing operation that is defined in a communication standard and that is on the target option, or the processing operation is different from a processing operation that is performed by another network device on the target option. The another network device includes a network device other than the first network device on the first path or a network device other than the first network device in the network. For example, the processing operation that is performed by the first network device on the target option is skipping the target option in a packet, or discarding a packet including the target option. A processing operation defined in the communication standard is an operation other than the skipping or discarding. Specifically, for example, it is assumed that the target option is a router alert option, and a processing operation on the router alert option defined in the communication standard is sending to a central processing unit (central processing unit, CPU). The processing operation that the first network device is capable of performing on the target option is a user-defined processing operation. It is assumed that the user-defined processing operation is discarding the packet including the router alert option, which is different from the processing operation defined in the communication standard.

In some embodiments, the processing operation that the first network device is capable of performing on a packet including the target option is a user-defined processing operation. Optionally, the processing operation is different from a processing operation that is defined in the communication standard and that is performed on the packet including the target option, or the processing operation is different from a processing operation that is performed by the another network device on the packet including the target option. For example, the processing operation that is performed by the first network device on the packet including the target option is discarding the packet including the target option, and the processing operation defined in the communication standard is an operation other than the discarding operation. Specifically, for example, it is assumed that the target option is the router alert option, and the processing operation that is defined in a communication standard and that is performed on the packet including the router alert option is sending to the CPU. The processing operation that the first network device is capable of performing on the packet including the target option is a user-defined processing operation. It is assumed that the user-defined processing operation is discarding the packet including the router alert option, which is different from the processing operation defined in the communication standard.

In some embodiments, a processing operation that the first network device is capable of performing on a packet that does not include the target option is a user-defined processing operation. Optionally, the processing operation is different from a processing operation that is defined in the communication standard and that is performed on the packet that does not include the target option, or the processing operation is different from a processing operation that is performed by the another network device on the packet that does not include the target option. For example, the processing operation that is performed by the first network device on the packet that does not include the target option is discarding the packet that does not include the target option, and the processing operation defined in the communication standard is an operation other than the discarding operation.

In some embodiments, the type of the option that the first network device is capable of processing includes a type of an option that the first network device is capable of processing in a first extension header, and the first extension header is a specified extension header in a packet. Optionally, the capability information of the first network device includes a correspondence between a header identifier of the first extension header and the type of the option, and the correspondence indicates the option in the first extension header.

In some embodiments, a maximum quantity of options that the first network device is capable of processing includes a maximum quantity of options that the first network device is capable of processing in a first extension header, and the first extension header is a specified extension header in a packet. Optionally, the capability information of the first network device includes a correspondence between the header identifier of the first extension header and the maximum quantity of options, n indicates the maximum quantity of options, and the correspondence indicates that the first network device is capable of processing a maximum of n options in the first extension header.

In step 501, the first device collects capability information of a network device in the following three manners. Certainly, the first device may collect the capability information of the network device in another manner, which is not listed one by one herein. A detailed process of the three manners is shown as follows.

In a first manner, the first device collects the capability information of the network device in an active detection manner.

In the first manner, the first device detects capability information of one network device in the network once, or the first device detects capability information of a plurality of network devices in the network once. Therefore, in the first manner, the following two examples are used for implementation. Certainly, there are other examples for implementing the first manner, and details are not listed herein.

Example 1: The first device collects capability information of each network device in a network, that is, the first device collects the capability information of each network device in a point-to-point collection manner.

During implementation, the first device sends a first capability information collection packet to the first network device. The first network device receives the first capability information collection packet, generates the first packet based on the first capability information collection packet, where the first packet includes the first capability information (capability information of the first network device), and sends the first packet to the first device. The first device receives the first packet, to obtain the capability information of the first network device. That is, the first device actively sends the first capability information collection packet to the first network device, and the first network device sends the capability information of the first network device to the first device based on the first capability information collection packet. In this way, a manner of collecting capability information of a network device is more flexible and more targeted.

The first device sends a second capability information collection packet to a second network device. The second network device receives the second capability information collection packet, generates the first packet based on the second capability information collection packet, where the first packet includes the first capability information (capability information of the second network device), and sends the first packet to the first device. The first device receives the first packet, to obtain the capability information of the second network device. The first network device and the second network device are two different network devices in the network. Other network devices in the network are not listed one by one. That is, the capability information collection packet is sent in a point-to-point manner, and different capability information collection packets are sent to different network devices.

In some embodiments, the first network device determines the first capability information based on at least one first option that the first network device is capable of processing, where the first capability information includes the at least one first option.

In some embodiments, the first capability information collection packet includes an option set, and the first device queries a processing capability of the first network device for each option in the option set. After receiving the first capability information collection packet, the first network device determines the processing capability for each option in the option set, and generates the first packet based on the processing capability for each option, where the first capability information in the first packet indicates the processing capability for each option.

Example 2: The first device collects the capability information of the plurality of network devices in a hop-by-hop collection and tail-end reflection manner, that is, the first device sends a collection packet once to detect the capability information of the plurality of network devices in the network. Optionally, the first network device sends the first capability information collection packet, the first capability information collection packet collects capability information of each network device hop by hop, and a tail-end device returns the capability information of each network device to the first device, where the tail-end device is a destination device corresponding to the first capability information collection packet.

In some embodiments, the first device collects the capability information of the plurality of network devices hop by hop by using a user-defined protocol or another protocol. The another protocol may be a BGP, a PCEP, in-band operations, administration, and maintenance (in-band operations, administration, and maintenance, IOAM), a path maximum transmission unit (path maximum transmission unit, PMTU), or the like.

In some embodiments, the first device indicates, by using the user-defined protocol or another protocol, the tail-end device to return the capability information of each network device. Optionally, the user-defined protocol defines indication information, and the indication information indicates the destination device (for example, the tail-end device) corresponding to the first capability information collection packet to return the capability information of each network device to the first device. That is, when the first device uses the user-defined protocol, the first capability information collection packet sent by the first device includes the indication information. When receiving the first capability information collection packet, the destination device (that is, the tail-end device) corresponding to the first capability information collection packet detects, based on the indication information in the first capability information collection packet, that a destination address of the first capability information collection packet is an address of the destination device, and returns capability information of each network device in the first capability information collection packet to the first device.

Alternatively, optionally, the another protocol is a two-way active measurement protocol (two-way active measurement protocol, TWAMP), a simple two-way active measurement protocol (simple two-way active measurement protocol, STWAMP), or the like. When the first device uses the another protocol, a format of the first capability information collection packet sent by the first device is a protocol packet format defined by the another protocol. When receiving the first capability information collection packet, the destination device (that is, the tail-end device) corresponding to the first capability information collection packet detects that a destination address of the first capability information collection packet is an address of the destination device, and returns, based on the another protocol, capability information of each network device in the first capability information collection packet to the first device based on the another protocol.

In some embodiments, the first device sends the first capability information collection packet, where the first capability information collection packet passes through at least a third network device and the first network device, and the first network device and the third network device are two different network devices in the network. After receiving the first capability information collection packet, the third network device adds capability information of the third network device to the first capability information collection packet. After receiving the first capability information collection packet, the first network device adds the capability information of the first network device to the first capability information collection packet. The first packet is obtained based on the first capability information collection packet. Therefore, in addition to the capability information of the first network device, the first packet further includes the capability information of the third network device, where the capability information of the third network device indicates a processing capability of the third network device; or the first capability information in the first packet indicates an intersection set of the processing capability of the first network device and the processing capability of the third network device.

In some embodiments, the third network device and the first network device are network devices on the first path. Therefore, in the example 2, the first device collects a network device on the first path, and the first path is a path used by the first device to send a packet. That is, the capability information collection packet may be targeted for a plurality of network devices along the first path. In this case, capability information fed back by the plurality of network devices may be included in a same packet. For example, the first packet received by the first device may include processing capabilities of the plurality of network devices. In this way, the processing capabilities of the plurality of network devices are obtained by using one first capability information collection packet, thereby improving capability obtaining efficiency.

During implementation, the first device sends the first capability information collection packet through the first path. For any network device on the first path, using the first network device on the first path as an example, the first network device receives the first capability information collection packet, and adds the capability information of the first network device to the first capability information collection packet based on triggering of the first capability information collection packet. After receiving the first capability information collection packet, another network device on the first path performs a same operation as the first network device.

Alternatively, the first capability information collection packet includes an option set, that is, the first device queries a processing capability of each network device on the first path for each option in the option set. After receiving the first capability information collection packet, the first network device determines the processing capability for each option in the option set, and adds the processing capability for each option to the first capability information collection packet. The first capability information collection packet may include a specific option set, that is, a specified collection range. When feeding back the processing capability of the first network device, the first network device performs feedback only for the option range specified in the first capability information collection packet, so that capability information is collected and fed back more targeted and more efficiently.

In some embodiments, a packet header of the first capability information collection packet includes a source address and a destination address, and the source address is an address of the first device. For ease of description, a destination device corresponding to the destination address is referred to as a second device, and the first device communicates with the second device through the first path. Therefore, after the first device sends the first capability information collection packet through the first path, the first capability information collection packet passes through each network device on the first path, and each network device that the first capability information collection packet passes through adds its capability information to the first capability information collection packet in a same way as the first network device. Finally, the second device receives the first capability information collection packet, and sends the first packet to the first device, where the first capability information in the first packet is capability information in the first capability information collection packet.

In some embodiments, the first device is a host, and the second device is another host to perform service packet transmission with the first device. For example, referring to FIG. 1, the host 1 is to perform service packet transmission with the host 2, the first device is the host 1, and the second device is the host 2.

In some embodiments, the first device is an endpoint device on the first path, and the second device is another endpoint device on the first path. For example, referring to FIG. 1, the first device is the network device 1, and the second device is the network device 3.

If the first network device is a network device that first receives the first capability information collection packet on the first path, after the first network device receives the first capability information collection packet, the first capability information collection packet does not include capability information of a network device. The first network device adds the capability information of the first network device to the first capability information collection packet. In this case, the first capability information collection packet includes capability information of one network device, and the capability information is the capability information of the first network device. Then, the first network device sends the first capability information collection packet to a next-hop network device on the first path.

If the first network device is not the first network device that receives the first capability information collection packet on the first path, the first capability information collection packet has been received by the first network device after passing through at least one network device, and each network device in the at least one network device is a network device on the first path. The first capability information collection packet received by the first network device may have the following two cases, and the two cases are shown as follows.

Case 1: The first capability information collection packet includes a device identifier and capability information of each network device. In case 1, the first network device adds a device identifier and capability information of the first network device to the first capability information collection packet. In this case, the first capability information collection packet includes the device identifier and the capability information of each network device and the device identifier and the capability information of the first network device. Then, the first network device sends the first capability information collection packet to a next-hop network device on the first path.

In some embodiments, the first capability information collection packet includes a correspondence between a device identifier and capability information, and the correspondence includes a device identifier and capability information of each network device that the first capability information collection packet passes through.

For example, referring to FIG. 6, it is assumed that an option that the network device 1 is capable of processing includes an option 1, an option 2, an option 3, and an option 4, an option that the network device 2 is capable of processing includes an option 1, an option 2, an option 3, and an option 5, and an option that the network device 3 is capable of processing includes an option 1, an option 2, and an option 3.

It is assumed that the first device is the host 1, the first device sends the first capability information collection packet on the first path, and a destination device corresponding to the first capability information collection packet is the host 2. An endpoint device (the network device 1) on the first path receives the first capability information collection packet, and adds a correspondence between a device identifier and capability information to the first capability information collection packet. The correspondence is a first record (a record whose sequence number is 1) shown in FIG. 6, and the correspondence includes a device identifier 1 of the network device 1 and capability information 1 of the network device 1. The capability information 1 includes a type 1 of the option 1, a type 2 of the option 2, a type 3 of the option 3, and a type 4 of the option 4. Then, the network device 1 sends the first capability information collection packet to a next-hop network device (the network device 2) on the first path.

The network device 2 receives the first capability information collection packet, and adds a correspondence between a device identifier and capability information to the first capability information collection packet. The correspondence is a second record (a record whose sequence number is 2) shown in FIG. 6, and the correspondence includes a device identifier 2 of the network device 2 and capability information 2 of the network device 2. The capability information 2 includes the type 1 of the option 1, the type 2 of the option 2, the type 3 of the option 3, and a type 5 of the option 5. Then, the network device 2 sends the first capability information collection packet to a next-hop network device (the network device 3) on the first path.

The network device 3 receives the first capability information collection packet, and adds a correspondence between a device identifier and capability information to the first capability information collection packet. The correspondence is a third record (a record whose sequence number is 3) shown in FIG. 6, and the correspondence includes a device identifier 3 of the network device 3 and capability information 3 of the network device 3. The capability information 3 includes the type 1 of the option 1, the type 2 of the option 2, and the type 3 of the option 3. Then, the network device 3 sends the first capability information collection packet to the host 2.

The host 2 receives the first capability information collection packet, and sends a first packet to the host 1, where the first packet includes the correspondence between the device identifier and the capability information in the first capability information collection packet. That is, the first capability information is the correspondence between the device identifier and the capability information in the first capability information collection packet. In this case, the first capability information includes capability information of each network device on the first path.

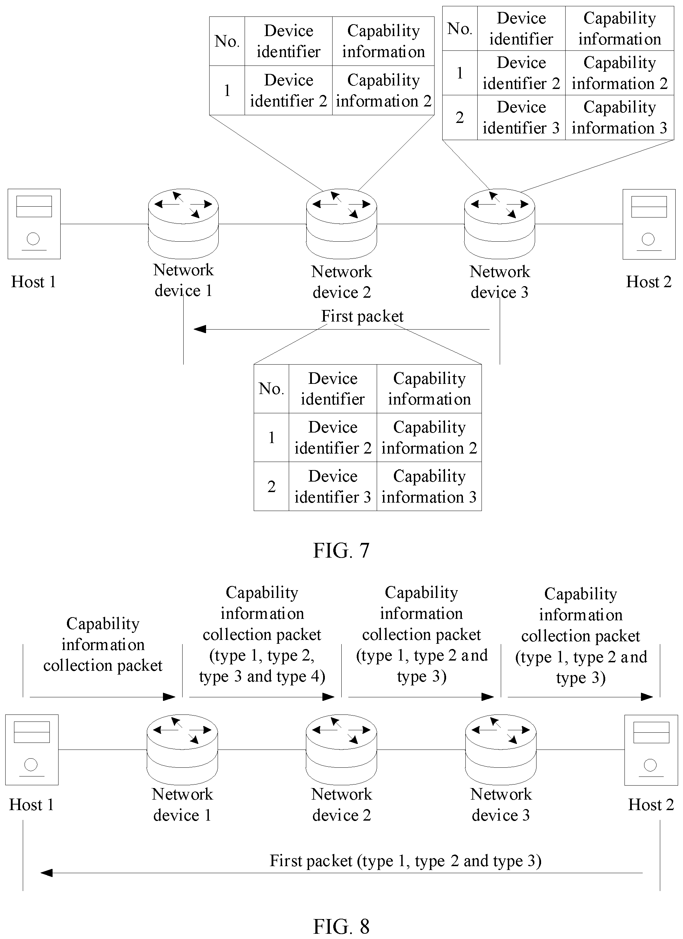

For another example, referring to FIG. 7, it is assumed that the first device is the endpoint device (the network device 1) on the first path, the first device sends the first capability information collection packet on the first path, and the destination device corresponding to the first capability information collection packet is the network device 3, that is, another endpoint device on the first path. The network device 2 on the first path receives the first capability information collection packet, and adds a correspondence between a device identifier and capability information to the first capability information collection packet. The correspondence is a first record (a record whose sequence number is 1) shown in FIG. 7, and the correspondence includes a device identifier 2 of the network device 2 and capability information 2 of the network device 2. The capability information 2 includes the type 1 of the option 1, the type 2 of the option 2, the type 3 of the option 3, and the type 5 of the option 5. Then, the network device 2 sends the first capability information collection packet to a next-hop network device (the network device 3) on the first path.

The network device 3 receives the first capability information collection packet, and adds a correspondence between a device identifier and capability information to the first capability information collection packet. The correspondence is a second record (a record whose sequence number is 2) shown in FIG. 7, and the correspondence includes a device identifier 3 of the network device 3 and capability information 3 of the network device 3. The capability information 3 includes the type 1 of the option 1, the type 2 of the option 2, and the type 3 of the option 3. The network device 3 further sends the first packet to the network device 1, where the first packet includes the correspondence between the device identifier and the capability information in the first capability information collection packet. That is, the first capability information is the correspondence between the device identifier and the capability information in the first capability information collection packet. In this case, the first capability information includes capability information of each network device on the first path.

Case 2: The first capability information collection packet includes a first intersection set, and the first intersection set is an intersection set of the capability information of all the network devices. In the case 2, the first network device performs an intersection operation between the first intersection set in the first capability information collection packet and the capability information of the first network device, to obtain a second intersection set, and updates the first intersection set in the first capability information collection packet to the second intersection set, so as to add the capability information of the first network device to the capability information collection packet. Then, the first network device sends the first capability information collection packet to a next-hop network device on the first path.

For example, referring to FIG. 8, it is assumed that the first device is the host 1, the first device sends the first capability information collection packet on the first path, and a destination device corresponding to the first capability information collection packet is the host 2. The endpoint device (the network device 1) on the first path receives the first capability information collection packet, and adds the capability information 1 of the network device 1 to the first capability information collection packet. The capability information 1 includes the type 1 of the option 1, the type 2 of the option 2, the type 3 of the option 3, and the type 4 of the option 4. Then, the network device 1 sends the first capability information collection packet to a next-hop network device (the network device 2) on the first path.

The network device 2 receives the first capability information collection packet. In this case, the first capability information collection packet includes a first intersection set 1, and the first intersection set 1 includes the type 1 of the option 1, the type 2 of the option 2, the type 3 of the option 3, and the type 4 of the option 4. The network device 2 performs an intersection operation on the first intersection set 1 and the capability information 2 of the network device 2, to obtain the second intersection set. The capability information 2 includes the type 1 of the option 1, the type 2 of the option 2, the type 3 of the option 3, and the type 5 of the option 5. Therefore, the second intersection set includes the type 1 of the option 1, the type 2 of the option 2, and the type 3 of the option 3. Then, the network device 2 updates the first intersection set 1 in the first capability information collection packet to the second intersection set. For ease of description, the second intersection set is referred to as a first intersection set 2, that is, the first capability information collection packet includes the first intersection set 2. The network device 2 sends the first capability information collection packet to a next-hop network device (the network device 3) on the first path.

The network device 3 receives the first capability information collection packet. In this case, the first capability information collection packet includes the first intersection set 2, and the first intersection set 2 includes the type 1 of the option 1, the type 2 of the option 2, and the type 3 of the option 3. The network device 3 performs an intersection operation on the first intersection set 2 and the capability information 3 of the network device 3, to obtain the second intersection set. The capability information 3 includes the type 1 of the option 1, the type 2 of the option 2, and the type 3 of the option 3. Therefore, the second intersection set includes the type 1 of the option 1, the type 2 of the option 2, and the type 3 of the option 3. Then, because the second intersection set is the same as the first intersection set 2 in the first capability information collection packet, the network device 3 sends the first capability information collection packet to the host 2.

The host 2 receives the first capability information collection packet, and sends the first packet to the host 1, where the first packet includes the first intersection set 2. In other words, the first capability information is the first intersection set 2 in the first capability information collection packet. In this case, the first capability information is an intersection set of the capability information of each network device on the first path.

In some embodiments, the first capability information includes one or more of the following intersection sets: a first field intersection set, a second field intersection set, a quantity of first fields, a quantity of second fields, or the like. The first field intersection set is obtained by performing an intersection operation on a type of an option that each network device on the first path is capable of processing. The second field intersection set is obtained by performing an intersection operation on a type of an option that each network device on the first path is capable of processing in the first extension header. The quantity of first fields is a minimum value in a maximum quantity of options that each network device on the first path is capable of processing. The quantity of second fields is a minimum value in a maximum quantity of options that each network device on the first path is capable of processing in the first extension header.

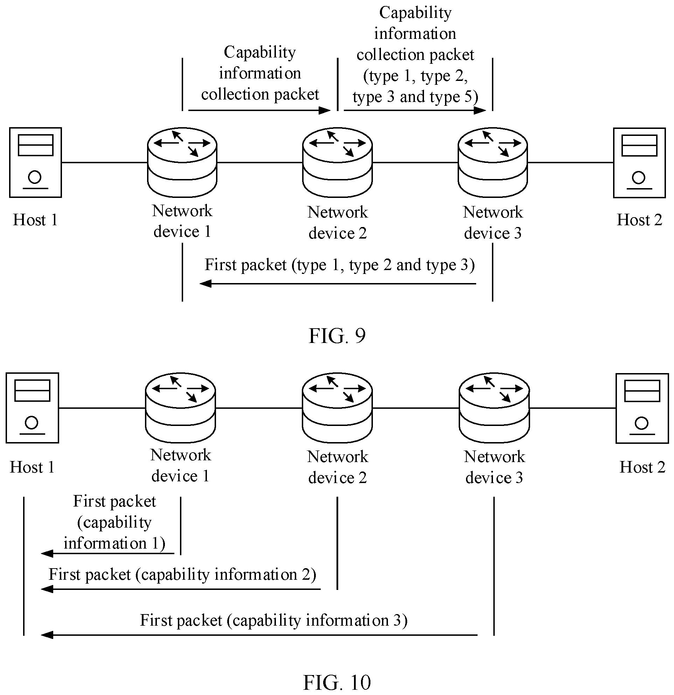

For another example, referring to FIG. 9, it is assumed that the first device is the endpoint device (the network device 1) on the first path, the first device sends the first capability information collection packet on the first path, and the destination device corresponding to the first capability information collection packet is the network device 3, that is, another endpoint device on the first path. The network device 2 on the first path receives the first capability information collection packet, and adds the capability information 2 of the network device 2 to the first capability information collection packet. The capability information 2 includes the type 1 of the option 1, the type 2 of the option 2, the type 3 of the option 3, and the type 5 of the option 5. Then, the network device 2 sends the first capability information collection packet to a next-hop network device (the network device 3) on the first path.

The network device 3 receives the first capability information collection packet. In this case, the first capability information collection packet includes a first intersection set, and the first intersection set includes the type 1 of the option 1, the type 2 of the option 2, the type 3 of the option 3, and the type 5 of the option 5. The network device 3 performs an intersection operation on the first intersection set and the capability information 3 of the network device 3, to obtain the second intersection set. The capability information 3 includes the type 1 of the option 1, the type 2 of the option 2, and the type 3 of the option 3. Therefore, the second intersection set includes the type 1 of the option 1, the type 2 of the option 2, and the type 3 of the option 3. Then, the network device 3 updates the first intersection set in the first capability information collection packet to the second intersection set. The network device 3 further sends the first packet to the network device 1, where the first packet includes the second intersection set. In other words, the first capability information is the second intersection set in the first capability information collection packet. In this case, the first capability information is an intersection set of the capability information of the network device on the first path.

In some embodiments, the second device exchanges content in a destination address field and a source address field in the first capability information collection packet, to obtain the first packet. That is, the second device separately reads a source address and a destination address from the source address field and the destination address field in the first capability information collection packet, replaces content in the source address field with the destination address, replaces the source address with content in the destination address field, and uses the replaced first capability information collection packet as the first packet.

In some embodiments, the first capability information collection packet includes indication information, and the indication information indicates the first network device to add the capability information of the first network device to the first capability information collection packet.

In some embodiments, the first capability information collection packet includes a capability collection TLV, and the capability collection TLV includes the indication information.

In some embodiments, the first capability information collection packet is a control packet or a data packet. A protocol used by the first capability information collection packet is a user-defined protocol or another protocol. For example, the first capability information collection packet is the control packet, and the protocol used by the first capability information collection packet is a BGP, a PCEP, or the like; or the first capability information collection packet is the data packet, and the protocol used by the first capability information collection packet is IOAM, a PMTU, or the like.

In a second manner, a first device receives capability information of a network device that is actively sent by the network device.

In some embodiments, an event is deployed on a network device on a first path in advance, where the first path is a path used by the first device to send a packet, and when the event occurs, the network device sends a first packet to the first device, where the first packet includes the capability information of the network device.

For example, the event is that the capability information of the network device is included in the first packet after the first packet is received, where the first packet is a packet that is sent by a source device corresponding to the first packet to the first device on the first path, and the first packet may be the control packet or the data packet.

During implementation, the source device corresponding to the first packet sends the first packet on the first path. For any network device on the first path, for ease of description, the network device is referred to as a first network device. The first network device receives the first packet, adds capability information of the first network device to the first packet, and then continues to send the first packet to the first device on the first path.

In some embodiments, each network device in a network architecture actively sends the first packet to the first device, and the first packet sent by each network device includes capability information of each network device.

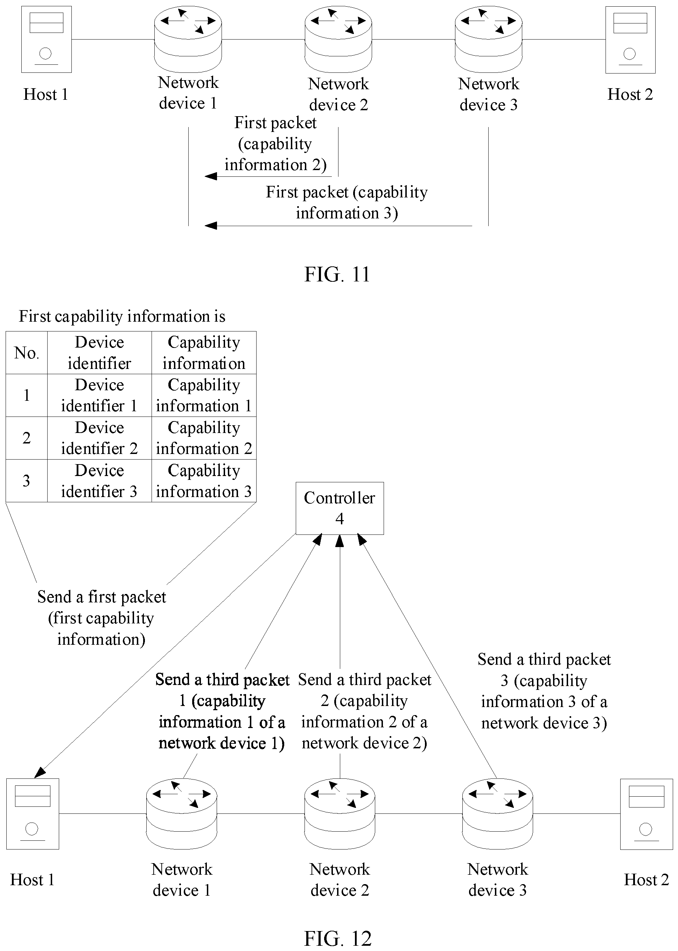

Referring to FIG. 10 or FIG. 11, the first device is a host 1 or a host 2, or the first device is an endpoint device (a network device 1 or a network device 3) on the first path.

It is assumed that the first device is the host 1. Referring to FIG. 10, the network device 3 sends a first packet to the host 1, and the first packet includes capability information 3 of the network device 3. The network device 2 sends a first packet to the host 1, where the first packet includes capability information 2 of the network device 2. The network device 1 sends a first packet to the host 1, where the first packet includes capability information 1 of the network device 1.

It is further assumed that the first device is an endpoint device (the network device 1) on the first path. Referring to FIG. 11, the network device 3 sends a first packet to the network device 1, and the first packet includes capability information 3 of the network device 3. The network device 2 sends a first packet to the network device 1, where the first packet includes the capability information 2 of the network device 2.

In a third manner, a first device collects capability information of a first network device by using a controller. In other words, the first device receives the capability information of the first network device collected by the controller.

During implementation, the following operations 5011 to 5012 are used for implementation, and the operations 5011 to 5012 are as follows:
5011. The first network device sends a third packet to the controller, where the third packet includes the capability information of the first network device.

In some embodiments, the third packet is a protocol packet or the like.

The first network device is any network device in the network architecture 100. For example, referring to FIG. 12, the first network device is a network device 1, a network device 2, or a network device 3. The network device 1 sends a third packet 1 to the controller. The third packet 1 includes capability information 1 of the network device 1, and the capability information 1 includes a type 1 of an option 1, a type 2 of an option 2, a type 3 of an option 3, and a type 4 of an option 4. The network device 2 sends a third packet 2 to the controller, where the third packet 2 includes capability information 2 of the network device 2, and the capability information 2 includes the type 1 of the option 1, the type 2 of the option 2, the type 3 of the option 3, and a type 5 of the option 5. The network device 3 sends a third packet 3 to the controller, where the third packet 3 includes capability information 3 of the network device 3, and the capability information 3 includes the type 1 of the option 1, the type 2 of the option 2, and the type 3 of the option 3.

5012. The controller sends a first packet to the first device, where the first packet includes first capability information, and the first capability information indicates a processing capability of the first network device for an option in an IPv6 packet.

In some embodiments, the first capability information includes the capability information of the first network device, or the first capability information includes capability information of each network device in the network architecture, or the first capability information includes capability information of each network device on the first path, and the first path is a path used by the first device to send a packet. Optionally, the first packet includes a correspondence between a device identifier and capability information, and the correspondence is used for storing the device identifier and the capability information of each network device.

In some embodiments, the first capability information includes an intersection set of capability information of each network device of at least one network device. Optionally, the at least one network device is a network device on the first path. The controller selects, from the received capability information of each network device, capability information of the network device on the first path, and performs an intersection operation on the selected capability information of the network device, to obtain the first capability information.

For example, referring to FIG. 12, it is assumed that the first device is the host 1. The controller receives the third packet 1, the third packet 2, and the third packet 3, and sends the first packet to the host 1. The first capability information in the first packet includes a correspondence between a device identifier and capability information. A first record (a record whose sequence number is 1) of the correspondence includes a device identifier 1 of the network device 1 and capability information 1 in the third packet 1, a second record (a record whose sequence number is 2) includes a device identifier 2 of the network device 2 and capability information 2 in the third packet 2, and a third record (a record whose sequence number is 3) includes a device identifier 3 of the network device 3 and capability information 3 in the third packet 3.

Alternatively, the first capability information includes an intersection set between the capability information 1 in the third packet 1, the capability information 2 in the third packet 2, and the capability information 3 in the third packet 3. That is, the controller performs an intersection operation on the type 1 of the option 1, the type 2 of the option 2, the type 3 of the option 3, and the type 4 of the option 4 included in the capability information 1, the type 1 of the option 1, the type 2 of the option 2, the type 3 of the option 3, and the type 5 of the option 5 included in the capability information 2, and the type 1 of the option 1, the type 2 of the option 2, and the type 3 of the option 3 included in the capability information 3. The intersection set includes the type 1, the type 2, and the type 3.

Optionally, the controller can also send the first packet to the host 2. In other words, the controller can also send the capability information of the network device to the host 2.

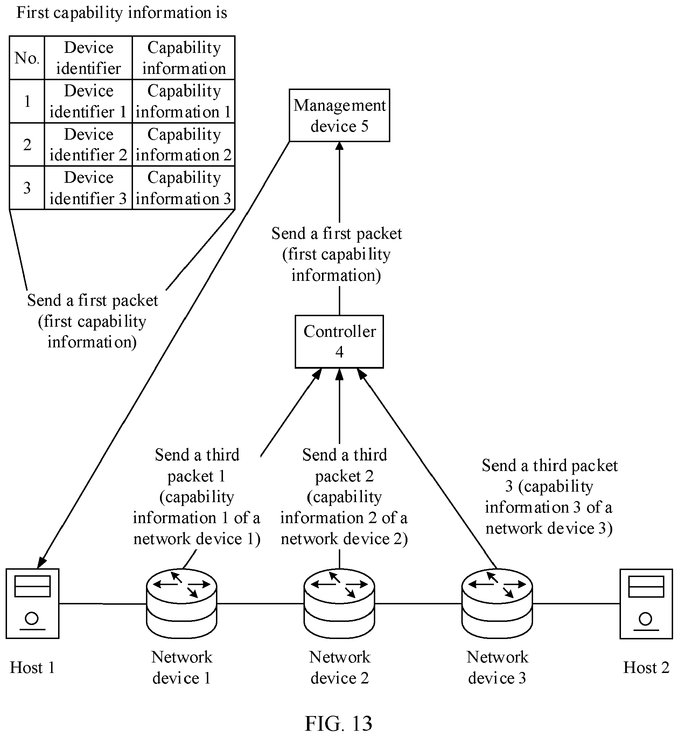

In some embodiments, referring to FIG. 13, the first device is a host, and the first device and the controller belong to different platforms. In this case, the controller sends the first packet to a management device corresponding to the first device. The management device receives the first packet, and then sends the first packet to the first device. For example, referring to FIG. 13, it is assumed that the first device is the host 1. The controller sends the first packet to the management device, and the management device receives the first packet and sends the first packet to the host 1. Optionally, the management device can also send the first packet to the host 2. Optionally, the management device corresponding to the host 1 and the management device corresponding to the host 2 are two different devices. The controller sends the first packet to the two management devices, and then the two management devices separately send the first packet to the host 1 and the host 2.

In some embodiments, the controller sends the first capability information to the management device corresponding to the first device. The management device receives the first capability information, and sends the first packet to the first device, where the first packet includes the first capability information.

In some embodiments, the controller sends the capability information of the network device to the management device corresponding to the first device. The management device receives the capability information of each network device, and sends the first packet to the first device, where the first packet includes the first capability information. Optionally, for a manner in which the management device obtains the first capability information, refer to the foregoing manner in which the controller obtains the first capability information. Details are not described herein again.

In some embodiments, interaction and processing of the capability information and/or the capability information collection packet between the controller and a device (the first device or the network device) are similar to interaction and processing of configuration information or policy information between the controller and the device. To be specific, for content such as an interaction manner and a protocol type used for the capability information and/or the capability information collection packet between the controller and the device, refer to content such as an interaction manner and a protocol type used for the configuration information or the policy information between the controller and the device. The protocol type herein includes any one of the following: a BGP-LS, an IGP, a PCEP, a NETCONF, and the like.

In some embodiments, the first packet sent by the first network device includes a TLV, and the TLV includes the first capability information.

In some embodiments, the capability information of the first network device includes one or more types of capability information described above, and the TLV includes a sub-TLV corresponding to each type information. For the sub-TLV corresponding to the type information, the sub-TLV includes the type information. For example, the first packet sent by the first network device includes a first sub-TLV, a second sub-TLV, a third sub-TLV, a fourth sub-TLV, a fifth sub-TLU, a sixth sub-TLV, and/or a seventh sub-TLV

The first sub-TLV includes a type of an option that the first network device is capable of processing. The second sub-TLV includes a type of an option that the first network device is capable of processing in the first extension header. The third sub-TLV includes a maximum quantity of options that the first network device is capable of processing. The fourth sub-TLV includes a maximum quantity of options that the first network device is capable of processing in the first extension header. The fifth sub-TLV includes a processing operation that the first network device is capable of performing on a first option. The sixth sub-TLV includes a processing operation that the first network device is capable of performing on a service packet including a second option. The seventh sub-TLV includes a processing operation that the first network device is capable of performing on a service packet that does not include a third option.

In some embodiments, if the endpoint device on the first path or a network edge device corresponding to the host receives the first packet, the endpoint device or the network edge device sends capability information of the endpoint device or the network edge device and the capability information of the network device in the first packet to the host.

The first device can collect capability information of a network device on at least one path according to the operations in step 201.

In some embodiments, a communication protocol used for the first packet includes any one of the following: a BGP-LS, an IGP, a PCEP, a NETCONF, and the like.

Step 502: The first device determines the processing capability of the first network device based on the first capability information.

In some embodiments, the first capability information includes the capability information of the first network device. Therefore, the first network device determines the processing capability of the first network device based on the capability information of the first network device. Alternatively, the first capability information includes capability information of a plurality of network devices, and the plurality of network devices include the first network device, so that the first device can determine processing capabilities of the plurality of network devices based on the first capability information.

In some embodiments, the first capability information indicates an intersection set of the capability information of the plurality of network devices, and the plurality of network devices include the first network device. Therefore, the first device determines an intersection set of the processing capabilities of the plurality of network devices based on the first capability information.

In some embodiments, the first capability information indicates a processing capability of each of the plurality of network devices for each option in an option set. Therefore, the first device determines the processing capability of each network device for each option based on the first capability information.

Optionally, after determining the processing capability of the network device, the first device may further send a packet based on the processing capability of the network device. In other words, the first device may further perform an operation in the following step 503.

Step 503: The first device sends a second packet based on the processing capability of the first network device.

That the first device sends the second packet based on the processing capability of the first network device can avoid sending the packet discarded by the first network device. In this way, the first network device does not discard the second packet after receiving the second packet, thereby avoiding service interruption. Alternatively, the first device avoids to send the second packet discarded by the first network device to the first network device. In this way, the second packet does not pass through the first network device, and is not discarded by the first network device, thereby avoiding service interruption.

In some embodiments, the first device sends the second packet to the first network device based on the processing capability of the first network device. In this case, the second packet is a packet according with the processing capability of the first network device, so as to avoid a case in which the first network device cannot process the second packet. In this way, the first network device does not discard the second packet after receiving the second packet, thereby avoiding service interruption.

Optionally, a packet header of the second packet includes at least one first option, and the at least one first option is an option that the first network device is capable of processing. Specifically, the second packet may include each option that the first network device is capable of processing, so as to ensure that the first network device can identify a first option in the second packet, and the first network device does not discard the second packet after receiving the second packet. A specific form of the first capability information may be directly listed options, and these options are options that the first network device is capable of processing.

In some embodiments, the packet header of the second packet includes at least one second option, the at least one second option is an intersection set of options that a plurality of network devices on a forwarding path of the second packet are capable of processing, and the plurality of network devices include the first network device. Specifically, the option included in the second packet may be the intersection set of the options that the plurality of network devices on the forwarding path of the second packet are capable of processing. In this way, the plurality of network devices on the forwarding path can identify a second option in the second packet, and none of these network devices discards the second packet.

In some embodiments, the first device determines, based on the processing capability of the first network device, a second path (that is, a forwarding path of the second packet) for transmission of the second packet, and sends the second packet through the second path. In other words, when calculating the second path of the second packet, the first device may refer to a processing capability of a network device in a network topology, including but not limited to the processing capability of the first network device. In this way, a network device on a determined path is capable of processing an option in the second packet, and does not discard the second packet when the second packet is transmitted through the second path.

That is, for the second packet, the first device can predict, based on the first capability information, which network devices are incapable of processing the option in the second packet, and discard the second packet, and can predict which network devices are capable of processing the option in the second packet. Therefore, when transmitting the second packet through the determined second path, the first device does not discard the second packet, thereby avoiding service interruption. Alternatively, the first device can predict which second packets can be discarded by which network devices on the second path when the second packet is transmitted on the second path. Therefore, sending these second packets on the second path can be avoided.

In some embodiments, the second path passes through the first network device, and the first network device is capable of processing all options in the packet header of the second packet. In this way, the first network device can identify each option in the second packet, so that the first network device does not discard the second packet after receiving the second packet.

In some embodiments, the second path passes through the first network device, and the first network device is capable of processing at least one option in the packet header of the second packet. In other words, the first network device is capable of processing some options in the second packet. In this case, the first network device is capable of processing some options in the packet header of the second packet, and the second packet may alternatively include some options that the first network device is incapable of processing. For example, when it is expected that the first network device does not discard the second packet because the first network device is incapable of processing the option, the second packet may also carry an option that the first network device is incapable of processing.

In some embodiments, the second path does not pass through the first network device, and the first network device is incapable of processing the at least one option in the packet header of the second packet. In this case, when the first device performs second path computation, because the first network device is incapable of processing all options in the packet header of the second packet, the forwarding path of the second packet does not pass through the first network device, and the first network device does not receive the second packet, avoiding the first network device to discard the second packet.

In some embodiments, the first device selects, based on processing capabilities of the plurality of network devices, the second path (which is the forwarding path of the second packet) for transmission of the second packet, or establishes the second path, where the plurality of network devices include the first network device. The first device sends the second packet through the second path.

During implementation, the first device obtains the second packet through encapsulation. For each path from the first device to a destination device corresponding to the second packet, the processing capabilities of the plurality of network devices include the processing capability of each network device on the path, or an intersection set of processing capabilities of the network devices on the path. The first device selects, from each path based on the processing capabilities of the plurality of network devices and each option included in the packet header of the second packet, the second path according with a first condition, or establishes the second path that meets a first condition.

The first condition includes one or more of the following: An option intersection set that each network device on the second path is capable of processing includes the option in the packet header of the second packet, a minimum value of the maximum quantity of options each network device on the second path is capable of processing is greater than or equal to a quantity of options in the packet header of the second packet, and an option intersection set that each network device on the second path is capable of processing in the first extension header includes an option in the first extension header of the second packet, or a minimum value of the maximum quantity of options that each network device on the second path is capable of processing in the first extension header is greater than or equal to a quantity of options in the first extension header of the second packet.

The network device through which the second path passes includes the first network device, but does not include the second network device. The first network device includes the processing capability for the option in the packet header of the second packet, and the second network device does not include the processing capability for the option in the packet header of the second packet. In this way, each network device on the second path includes the processing capability for the option in the packet header of the second packet, and each network device can identify and process the option in the packet header of the second packet, thereby avoiding discarding the second packet.

In some embodiments, for the first path used by the first device to send a packet, the first device obtains the second packet through encapsulation based on the first capability information, where the second packet meets a second condition.

The second condition includes one or more of the following: Each option included in the packet header of the second packet is the option that each network device on the first path is capable of processing, the quantity of options included in the packet header of the second packet is less than or equal to the maximum quantity of options that each network device on the first path is capable of processing, and each option included in the first extension header of the second packet is the option that each network device on the first path is capable of processing in the first extension header, or the quantity of options included in the first extension header in the second packet is less than or equal to the maximum quantity of options that each network device on the first path is capable of processing in the first extension header.

In some embodiments, an operation of obtaining, by the first device, the second packet through encapsulation is as follows: When the first device is a host, the first device encapsulates to-be-sent data to obtain the second packet. When the first device is the endpoint device on the first path or the network edge device, the first device receives the third packet sent by the host, where the third packet includes data that the host needs to send, and encapsulates the third packet to obtain the second packet.

In some embodiments, the second packet is an IPv6 packet or the like.

In some embodiments, the packet header of the second packet includes a third option and a fourth option, the first network device is capable of processing the third option, the first network device is incapable of processing the fourth option, a second network device on the forwarding path of the second packet is capable of processing the fourth option, and the second network device is different from the first network device. Specifically, in some cases, the second packet may alternatively include an option that the first network device is incapable of processing but another network device on the first path is capable of processing. For example, when it is expected that the first network device does not discard the second packet because the first network device is incapable of processing the option, the second packet may also carry an option that the first network device is incapable of processing.

Optionally, although the first network device is incapable of processing the fourth option, the first network device skips the fourth option in the second packet based on content of the first two bits of an option type of the fourth option. The first device determines, based on a processing capability of the first network device for the fourth option, that the first network device skips the fourth option, and therefore includes the fourth option in the second packet.

In embodiments of this application, because the first device receives the first packet, the first packet includes the first capability information, and the first capability information indicates the processing capability of the first network device for the option. In this way, the first device can obtain a processing capability of each network device, so that when sending the second packet, the first device sends the second packet on the path based on the first capability information, and each network device on the path can identify and process the option in the second packet, thereby avoiding the network device to discard the second packet and avoiding service interruption. In addition, the first device obtains the processing capability of each network device by sending the capability information collection packet to each network device, or the first device collects the processing capability of each network device on the first path by sending the capability information collection packet on the first path, thereby enriching a capability collection manner and improving capability collection flexibility. The processing capability of each network device on the first path is collected by using one capability information collection packet, so as to improve capability collection efficiency.

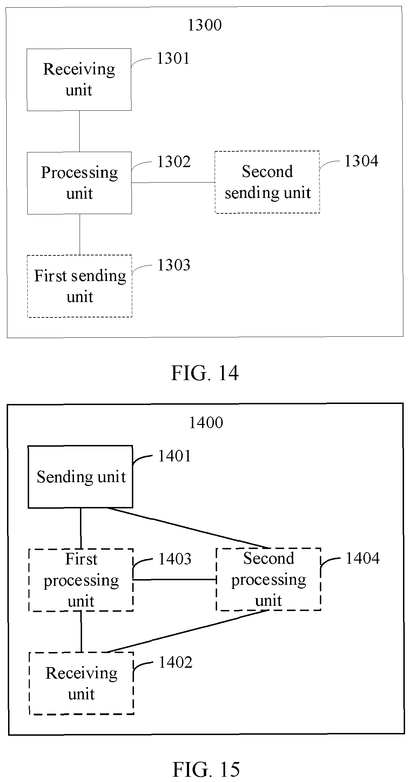

Referring to FIG. 14, an embodiment of this application provides a capability obtaining apparatus 1300. The apparatus 1300 is deployed on the first device in any one of the foregoing embodiments. For example, the apparatus 1300 is deployed on the host (for example, the host 1 or the host 2), the endpoint device on the path, or the network edge device (for example, the network device 1 or the network device 3) in the network architecture 100 shown in FIG. 1, FIG. 3, or FIG. 4, or the apparatus 1300 is deployed on the first device in the method 500 shown in FIG. 5 or the first device or the controller in the method 600 shown in FIG. 12. Referring to FIG. 14, the apparatus 1300 includes:
a receiving unit 1301, configured to receive a first packet, where the first packet includes first capability information, and the first capability information indicates a processing capability of a first network device for an option option in a packet header of an internet protocol version 6 IPv6 packet; and
a processing unit 1302, configured to determine the processing capability of the first network device based on the first capability information.

Optionally, for a detailed implementation process in which the receiving unit 1301 receives the first packet, refer to related content of step 501 in the method 500 shown in FIG. 5 or related content of step 602 in the method 600 shown in FIG. 12. Details are not described herein again.

Optionally, for a detailed implementation process in which the processing unit 1302 determines the processing capability, refer to related content of step 502 in the method 500 shown in FIG. 5 or related content of step 603 in the method 600 shown in FIG. 12. Details are not described herein again.

Optionally, the apparatus 1300 further includes:
a first sending unit 1303, configured to send a second packet based on the processing capability of the first network device, where the second packet is an IPv6 packet.

Optionally, for a detailed implementation process in which the first sending unit 1303 sends the second packet, refer to related content of step 503 in the method 500 shown in FIG. 5 or related content of step 604 in the method 600 shown in FIG. 12. Details are not described herein again.

Optionally, the first sending unit 1303 is configured to send the second packet to the first network device based on the processing capability of the first network device.

Optionally, for a detailed implementation process in which the first sending unit 1303 sends the second packet to the first network device, refer to related content of step 503 in the method 500 shown in FIG. 5 or related content of step 604 in the method 600 shown in FIG. 12. Details are not described herein again.

Optionally, a packet header of the second packet includes at least one first option, and the at least one first option is an option that the first network device is capable of processing.

Optionally, the packet header of the second packet includes at least one second option, the at least one second option is an intersection set of options that a plurality of network devices on a forwarding path of the second packet are capable of processing, and the plurality of network devices include the first network device.

Optionally, the packet header of the second packet includes the third option and the fourth option, the first network device is capable of processing the third option, the first network device is incapable of processing the fourth option, the second network device on the forwarding path of the second packet is capable of processing the fourth option, and the second network device is different from the first network device.

Optionally, the processing unit 1302 is further configured to determine a path for transmission of the second packet based on the processing capability of the first network device.

Optionally, for a detailed implementation process in which the processing unit 1302 determines the path, refer to related content of step 503 in the method 500 shown in FIG. 5 or related content of step 604 in the method 600 shown in FIG. 12. Details are not described herein again.

Optionally, the determined path passes through the first network device, and the first network device is capable of processing all options in the packet header of the second packet.

Optionally, the determined path passes through the first network device, and the first network device is capable of processing at least one option in the packet header of the second packet.

Optionally, the determined path does not pass through the first network device, and the first network device is incapable of processing at least one option in the packet header of the second packet.

Optionally, the apparatus 1300 further includes:
a second sending unit 1304, configured to send a first capability information collection packet to the first network device, where the first packet is generated based on the first capability information collection packet.

Optionally, for a detailed implementation process in which the second sending unit 1304 sends the first capability information collection packet, refer to related content of step 501 in the method 500 shown in FIG. 5. Details are not described herein again.

Optionally, the second sending unit 1304 is further configured to send a second capability information collection packet to a third network device.

The processing unit 1302 is further configured to obtain second capability information, where the second capability information indicates a processing capability of the third network device.

Optionally, for a detailed implementation process in which the second sending unit 1304 sends the second capability information collection packet, refer to related content of step 501 in the method 500 shown in FIG. 5. Details are not described herein again.

Optionally, for a detailed implementation process in which the processing unit 1302 obtains the second capability information, refer to related content of step 501 in the method 500 shown in FIG. 5. Details are not described herein again.

Optionally, the first capability information collection packet passes through the first network device and the third network device, the first packet further includes capability information of the third network device, and the capability information of the third network device indicates the processing capability of the third network device.

Optionally, the first capability information collection packet passes through the first network device and the third network device. The first capability information indicates an intersection set of the processing capability of the first network device and the processing capability of the third network device.

Optionally, the first capability information collection packet includes an option set, and the first capability information indicates a processing capability of the first network device for each option in the option set.

Optionally, the apparatus 1300 includes a device or a controller for encapsulating an IPv6 packet header.

Optionally, the first packet is generated by any one of the following devices: a controller, a first network device, a network edge device corresponding to the apparatus 1300, or a management device corresponding to the apparatus 1300.

Optionally, a packet header of the IPv6 packet includes an IPv6 extension header, and the IPv6 extension header includes one or more of the following: a hop-by-hop options header HBH, a destination options header DOH, or a segment routing header SRH.

Optionally, the first capability information includes at least one first option, and the first network device is capable of processing the at least one first option.

Optionally, the processing capability includes one or more of the following capabilities:
a type of an option that the first network device is capable of processing, a maximum quantity of options that the first network device is capable of processing, a processing operation that the first network device is capable of performing on a target option, a processing operation that the first network device is capable of performing on a packet that includes a target option, or a processing operation that the first network device is capable of performing on a packet that does not include a target option.

Optionally, the first packet includes a type length value TLV field, and the TLV field includes the first capability information.

Optionally, the first packet is a control packet or a data packet.

Optionally, a communication protocol used for the first packet includes any one of the following: a border gateway protocol-link state BGP-LS, an interior gateway protocol IGP, a path computation element protocol PCEP, and a network configuration protocol NETCONF.

In embodiments of this application, the receiving unit receives the first packet, where the first packet includes the first capability information, and the first capability information indicates a processing capability of the first network device for an option in the packet header of the IPv6 packet. The processing unit determines the processing capability of the first network device based on the first capability information. Because the first capability information in the first packet indicates the processing capability of the first network device for the option, the processing unit determines the processing capability of the first network device based on the first capability information. In this way, when sending a packet, the sending unit may send the packet with reference to the processing capability of the first network device. Sending a packet discarded by the first network device can be avoided, thereby avoiding service interruption.

Referring to FIG. 15, an embodiment of this application provides a capability information sending apparatus 1400. The apparatus 1400 is deployed on the first network device in any one of the foregoing embodiments. For example, the apparatus 1400 is deployed on the network device (for example, the network device 1, the network device 2, or the network device 3) in the network architecture 100 shown in FIG. 1, FIG. 3, or FIG. 4, or the apparatus 1400 is deployed on the first network device in the method 500 shown in FIG. 5 or the first network device or the controller in the method 600 shown in FIG. 12. Referring to FIG. 15, the apparatus 1400 includes:
a sending unit 1401, configured to send a first packet, where the first packet includes first capability information, and the first capability information indicates a processing capability of the apparatus for an option option field in a packet header of an internet protocol version 6 IPv6 packet.

Optionally, for a detailed implementation process in which the sending unit 1401 sends the first packet, refer to related content of step 501 in the method 500 shown in FIG. 5 or related content of step 602 in the method 600 shown in FIG. 12. Details are not described herein again.

Optionally, the apparatus 1400 further includes:
a receiving unit 1402, configured to receive a first capability information collection packet; and
a first processing unit 1403, configured to generate a first packet based on the first capability information collection packet.

Optionally, for a detailed implementation process in which the receiving unit 1402 receives the first capability information collection packet, refer to related content of step 501 in the method 500 shown in FIG. 5. Details are not described herein again.

Optionally, for a detailed implementation process in which the first processing unit 1403 generates the first packet, refer to related content of step 501 in the method 500 shown in FIG. 5. Details are not described herein again.

Optionally, the first capability information collection packet includes an option set.

The first processing unit 1403 is configured to generate the first packet based on the processing capability of the apparatus 1400 for each option in the option set, where the first capability information indicates the processing capability of the apparatus 1400 for each option in the option set.

Optionally, for a detailed implementation process in which the first processing unit 1403 generates the first packet based on the processing capability of the apparatus 1400 for each option in the option set, refer to related content of step 501 in the method 500 shown in FIG. 5. Details are not described herein again.

Optionally, the receiving unit 1402 is configured to receive the second packet, where the second packet includes second capability information, and the second capability information indicates a processing capability of a second network device for an option field in a packet header of an IPv6 packet.

The first processing unit 1403 is configured to generate the first packet based on the second packet.

The first packet further includes the second capability information, or the first capability information indicates an intersection set of the processing capability of the first network device for the option field in the packet header of the IPv6 packet and the processing capability of the second network device for the option field in the packet header of the IPv6 packet.

Optionally, the apparatus 1400 further includes:
a second processing unit 1404, configured to determine first capability information based on at least one first option that the apparatus 1400 is capable of processing, where the first capability information includes the at least one first option.

Optionally, for a detailed implementation process in which the second processing unit 1404 determines the first capability information, refer to related content of step 501 in the method 500 shown in FIG. 5. Details are not described herein again.

Optionally, the processing capability includes one or more of the following capabilities:
a type of an option that the apparatus 1400 is capable of processing, a maximum quantity of options that the apparatus 1400 is capable of processing, a processing operation that the apparatus 1400 is capable of performing on a target option, a processing operation that the apparatus 1400 is capable of performing on a packet that includes a target option, or a processing operation that the apparatus 1400 is capable of performing on a packet that does not include a target option.

Optionally, the first packet includes a type length value TLV field, and the TLV field includes the first capability information.

Optionally, the first packet is a control packet or a data packet.

Optionally, a communication protocol used for the first packet includes any one of the following: a border gateway protocol-link state BGP-LS, an interior gateway protocol IGP, a path computation element protocol PCEP, and a network configuration protocol NETCONF.

Optionally, a packet header of the IPv6 packet includes an IPv6 extension header, and the IPv6 extension header includes one or more of the following: a hop-by-hop options header HBH, a destination options header DOH, or a segment routing header SRH.

In this embodiment of this application, the sending unit sends the first packet, where the first packet includes the first capability information, and the first capability information indicates a processing capability of the apparatus for the option field in the packet header of the IPv6 packet. Because the first capability information in the first packet indicates a processing capability of the apparatus for the option, for a device that receives the first packet, the device determines a processing capability of the apparatus based on the first capability information. When sending a packet, the device may send the packet with reference to the processing capability of the apparatus. For example, sending a packet discarded by the apparatus can be avoided, thereby avoiding service interruption.

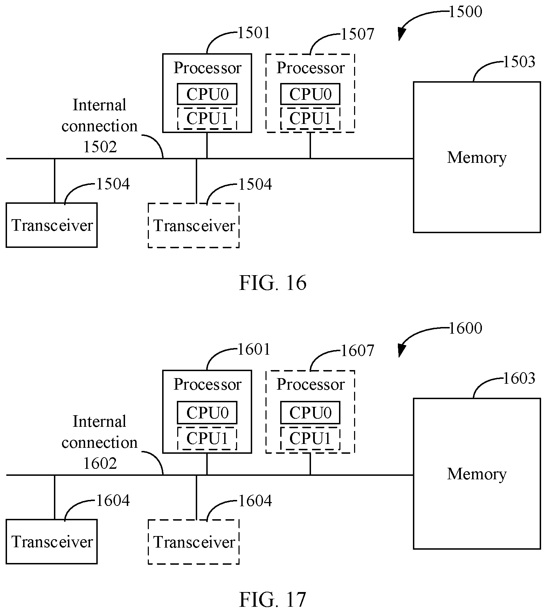

FIG. 16 is a schematic diagram of a capability obtaining apparatus 1500 according to an embodiment of this application. The apparatus 1500 may be the first device provided in any one of the foregoing embodiments. For example, the apparatus 1500 is the host (for example, the host 1 or the host 2), the endpoint device on the path, or the network edge device (for example, the network device 1 or the network device 3) in the network architecture 100 shown in FIG. 1, FIG. 3, or FIG. 4, or the apparatus 1500 is the first device in the method 500 shown in FIG. 5 or the first device or the controller in the method 600 shown in FIG. 12. The apparatus 1500 includes at least one processor 1501, an internal connection 1502, a memory 1503, and at least one transceiver 1504.

The apparatus 1500 is an apparatus of a hardware structure, and can be configured to implement a functional module in the apparatus 1300 shown in FIG. 14. For example, a person skilled in the art can figure out that the processing unit 1302 in the apparatus 1300 shown in FIG. 14 can be implemented by the at least one processor 1501 by invoking code in the memory 1503, and the receiving unit 1301, the first sending unit 1303, and the second sending unit 1304 in the apparatus 1300 shown in FIG. 14 can be implemented by the at least one transceiver 1504.

The apparatus 1500 can be further configured to implement a function of the first device in any one of the foregoing embodiments.

The processor 1501 can be a general-purpose central processing unit (central processing unit, CPU), a network processor (network processor, NP), a microprocessor, an application-specific integrated circuit (application-specific integrated circuit, ASIC), or one or more integrated circuits configured to control program execution in the solutions of this application.

The internal connection 1502 may include a path for transmitting information between the foregoing components. The internal connection 1502 may be a board, a bus, or the like.

The at least one transceiver 1504 is configured to communicate with another device or a communication network.

The memory 1503 may be a read-only memory (read-only memory, ROM) or another type of static storage device that can store static information and instructions, or a random access memory (random access memory, RAM) or another type of dynamic storage device that can store information and instructions; or an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the bus. The memory may alternatively be integrated with the processor.

The memory 1503 is configured to store application program code for executing the solutions in this application, and the processor 1501 controls the execution. The processor 1501 is configured to execute the application program code stored in the memory 1503, and cooperate with the at least one transceiver 1504, so that the apparatus 1500 implements a function in the method in this patent.

During specific implementation, in an embodiment, the processor 1501 may include one or more CPUs, for example, a CPU 0 and a CPU 1 in FIG. 16.

In specific implementation, in an embodiment, the apparatus 1500 may include a plurality of processors, for example, the processor 1501 and a processor 1507 in FIG. 16. Each of the processors may be a single-core (single-CPU) processor, or may be a multi-core (multi-CPU) processor. The processor herein may be one or more devices, circuits, and/or processing cores configured to process data (for example, computer program instructions).

Referring to FIG. 17, an embodiment of this application provides a schematic diagram of a capability information sending apparatus 1600. The apparatus 1600 may be the first network device provided in any one of the foregoing embodiments. For example, the apparatus 1600 is the network device (for example, the network device 1, the network device 2, or the network device 3) in the network architecture 100 shown in FIG. 1, FIG. 3, or FIG. 4, or the apparatus 1600 is the first network device in the method 500 shown in FIG. 5 or the first network device or the controller in the method 600 shown in FIG. 12. The apparatus 1600 includes at least one processor 1601, an internal connection 1602, a memory 1603, and at least one transceiver 1604.

The apparatus 1600 is an apparatus of a hardware structure, and may be configured to implement a functional module in the apparatus 1400 shown in FIG. 15. For example, a person skilled in the art can figure out that the first processing unit 1403 and the second processing unit 1404 in the apparatus 1400 shown in FIG. 15 may be implemented by the at least one processor 1601 by invoking code in the memory 1603, and the sending unit 1401 in the apparatus 1400 shown in FIG. 15 and the receiving unit 1302 may be implemented by the at least one transceiver 1604.

The apparatus 1600 may be further configured to implement a function of the network device in any one of the foregoing embodiments.

The processor 1601 may be a general-purpose central processing unit (central processing unit, CPU), a network processor (network processor, NP), a microprocessor, an application-specific integrated circuit (application-specific integrated circuit, ASIC), or one or more integrated circuits configured to control program execution in the solutions of this application.

The internal connection 1602 may include a path for transmitting information between the foregoing components. The internal connection 1602 may be a board, a bus, or the like.

The at least one transceiver 1604 is configured to communicate with another device or a communication network.

The memory 1603 may be a read-only memory (read-only memory, ROM) or another type of static storage device that can store static information and instructions, or a random access memory (random access memory, RAM) or another type of dynamic storage device that can store information and instructions; or an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the bus. The memory may alternatively be integrated with the processor.

The memory 1603 is configured to store application program code for executing the solutions in this application, and the processor 1601 controls the execution. The processor 1601 is configured to execute the application program code stored in the memory 1603, and cooperate with the at least one transceiver 1604, so that the apparatus 1600 implements a function in the method in this patent.

During specific implementation, in an embodiment, the processor 1601 may include one or more CPUs, for example, a CPU 0 and a CPU 1 in FIG. 17.

In specific implementation, in an embodiment, the apparatus 1600 may include a plurality of processors, for example, the processor 1601 and a processor 1607 in FIG. 17. Each of the processors may be a single-core (single-CPU) processor, or may be a multi-core (multi-CPU) processor. The processor herein may be one or more devices, circuits, and/or processing cores configured to process data (for example, computer program instructions).

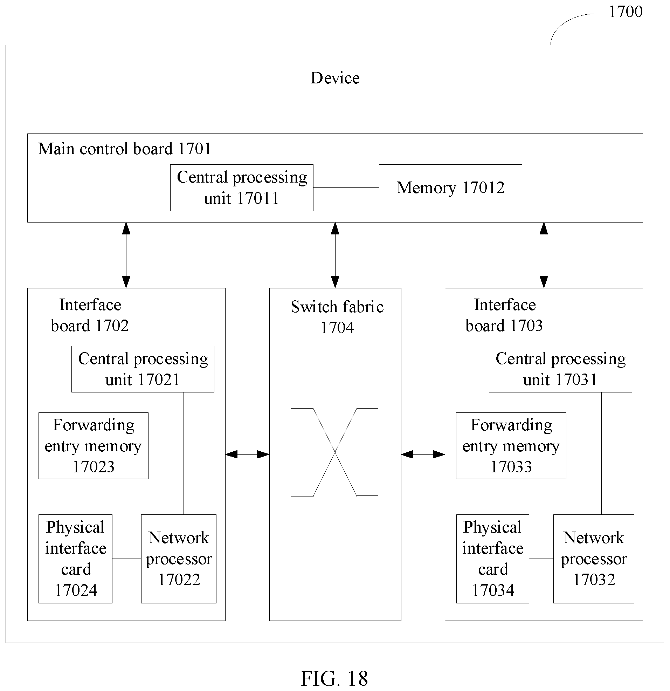

Referring to FIG. 18, FIG. 18 is a schematic structural diagram of a device 1700 according to an example embodiment of this application. Optionally, the device 1700 is the first device according to any one of the foregoing embodiments. For example, the device 1700 is the endpoint device on the path or the network edge device (for example, the network device 1 or the network device 3) in the network architecture 100 shown in FIG. 1, FIG. 3, or FIG. 4, or the device 1700 is the first device in the method 500 shown in FIG. 5 or the first device or the controller in the method 600 shown in FIG. 12. In other words, the first device in the method 500 shown in FIG. 5 or the method 600 shown in FIG. 12 may be implemented by using the device 1700.

The device 1700 is, for example, a network device. For example, the device 1700 is a switch, a router, or the like. As shown in FIG. 18, the device 1700 includes a main control board 1701 and an interface board 1702.

The main control board 1701 is also referred to as a main processing unit (main processing unit, MPU) or a route processing card (route processor card). The main control board 1701 is configured to control and manage components in the device 1700, including route computation, device management, device maintenance, and protocol processing functions. The main control board 1701 includes a central processing unit 17011 and a memory 17012.

The interface board 1702 is also referred to as a line interface unit card (line processing unit, LPU), a line card (line card), or a service board. The interface board 1702 is configured to provide various service interfaces, and forward a data packet. The service interface includes but is not limited to an ethernet interface, a POS (Packet over SONET/SDH) interface, and the like. The ethernet interface is, for example, a flexible Ethernet service interface (Flexible Ethernet Clients, FlexE Clients). The interface board 1702 includes a central processing unit 17021, a network processor 17022, a forwarding entry memory 17023, and a physical interface card (physical interface card, PIC) 17024.

The central processing unit 17021 on the interface board 1702 is configured to control and manage the interface board 1702 and communicate with the central processing unit 17011 on the main control board 1701.

The network processor 17022 is configured to implement packet forwarding processing. A form of the network processor 17022 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 17022 is configured to forward a received packet based on a forwarding table stored in the forwarding entry memory 17023, and if a destination address of the packet is an address of the device 1700, the packet is sent to a CPU (for example, a central processing unit 17021) for processing. If the destination address of the packet is not the address of the device 1700, a next hop and an egress interface corresponding to the destination address are found in the forwarding table based on the destination address, and the packet is forwarded to the egress interface corresponding to the destination address. Processing on an uplink packet may include: processing at a packet ingress interface and forwarding table lookup, and processing on a downlink packet may include: forwarding table lookup and the like. In some embodiments, the central processing unit may also perform a function of the forwarding chip, for example, implement software forwarding based on a general-purpose CPU, so that the interface board does not need the forwarding chip.

The physical interface card 17023 is configured to implement an interconnection function at a physical layer. Original traffic enters the interface card 1702, and a processed packet is sent from the physical interface card 1702. The physical interface card 17023, also referred to as a subcard, may be installed on the interface board 1702, and is responsible for converting an optical/electrical signal into a packet, performing validity check on the packet, and forwarding the packet to the network processor 17022 for processing. In some embodiments, the central processing unit can also perform a function of the network processor 17022, for example, implement software forwarding based on a general CPU. Therefore, the network processor 17022 is not required in the physical interface card 17023.

Optionally, the device 1700 includes a plurality of interface boards. For example, the device 1700 further includes an interface board 1703. The interface board 1703 includes a central processing unit 17031, a network processor 17032, a forwarding entry memory 17033, and a physical interface card 17034. Functions and implementations of components in the interface board 1703 are the same as or similar to those of the interface board 1702, and details are not described herein again.

Optionally, the device 1700 further includes a switch fabric 1704. The switch fabric 1704 may also be referred to as a switch fabric unit (switch fabric unit, SFU). In a case in which the device 1700 has a plurality of interface boards, the switch fabric 1704 is configured to complete data exchange between the interface boards. For example, the interface board 1702 and the interface board 1703 can communicate with each other via the switch fabric 1704.

The main control board 1701 and the interface board 1702 are coupled. For example, the main control board 1701, the interface board 1702, the interface board 1703, and the switch fabric 1704 are connected to a system backboard through a system bus for interconnection. In a possible implementation, an inter-process communication (inter-process communication, IPC) channel is established between the main control board 1701 and the interface board 1702, and the main control board 1701 and the interface board 1702 communicate with each other through an IPC channel.

Logically, the device 1700 includes a control plane and a forwarding plane. The control plane includes the main control board 1701 and a central processing unit. The forwarding plane includes components used for forwarding, for example, the forwarding entry memory 17023, the physical interface card 17024, and the network processor 17022. The control plane performs functions such as a function of a router, generating a forwarding table, processing signaling and a protocol packet, and configuring and maintaining a status of a device. The control plane delivers the generated forwarding table to the forwarding plane. On the forwarding plane, the network processor 17022 searches the forwarding table delivered by the control plane to forward a packet received by the physical interface card 17024. The forwarding table delivered by the control plane may be stored in the forwarding entry memory 17023. In some embodiments, the control plane and the forwarding plane may be completely separated, and are not on a same device.

It should be noted that there may be one or more main control boards 1701. When there are a plurality of main control boards 1701, the main control board 1701 may include an active main control board and a standby main control board. There may be one or more interface boards, and the device 1700 has a stronger data processing capability and provides more interface boards. There may also be one or more physical interface cards on the interface board. There may be no switch fabric 1704, or there may be one or more switch fabrics 1704. When there are a plurality of switch fabrics 1704, load sharing and redundancy backup may be implemented together. In a centralized forwarding architecture, the device 1700 may not need a switch fabric, and an interface board provides a function of processing service data of an entire system. In a distributed forwarding architecture, the device 1700 may have at least one switch fabric 1704, and exchange data between a plurality of interface boards via the switch fabric 1704, to provide a large-capacity data exchange and processing capability. Therefore, a data access and processing capability of the device 1700 in the distributed architecture is better than that of the device in the centralized architecture. Optionally, the device 1700 may alternatively be in a form in which there is only one board card. To be specific, there is no switch fabric, and functions of the interface board and the main control board are integrated on the board card. In this case, the central processing unit on the interface board and the central processing unit on the main control board may be combined to form one central processing unit on the board card, to perform functions obtained by combining the two central processing units. This form of device (for example, a network device such as a low-end switch or a router) has a weak data exchange and processing capability. A specific architecture that is to be used depends on a specific networking deployment scenario. This is not limited herein.

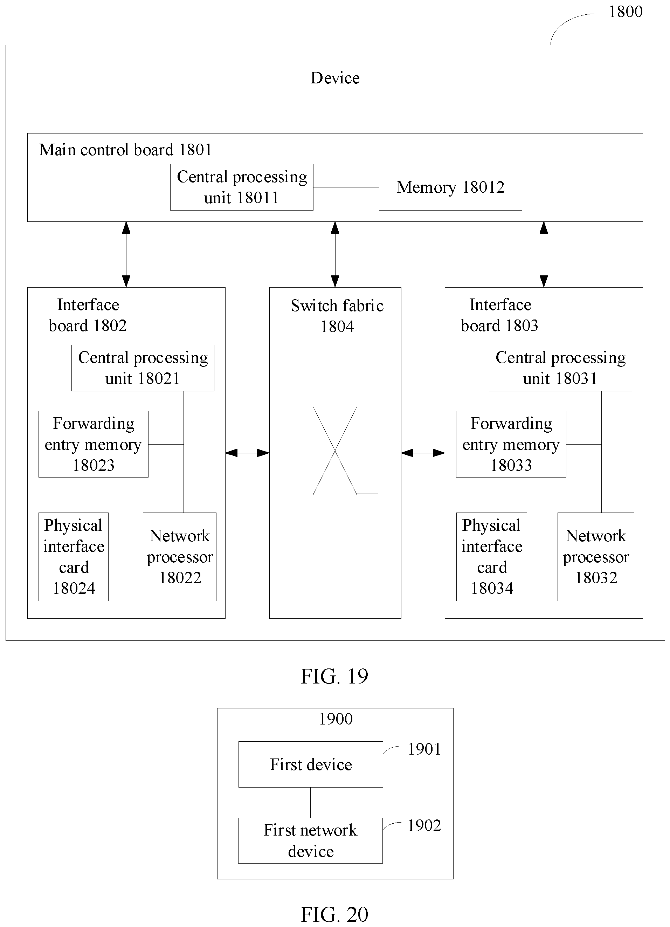

Referring to FIG. 19, FIG. 19 is a schematic structural diagram of a device 1800 according to an example embodiment of this application. Optionally, the device 1800 is the first network device according to any one of the foregoing embodiments. For example, the device 1800 is the network device (for example, the network device 1, the network device 2, or the network device 3) in the network architecture 100 shown in FIG. 1, FIG. 3, or FIG. 4, or the device 1800 is the first network device in the method 500 shown in FIG. 5 or the first network device or the controller in the method 600 shown in FIG. 12. In other words, the network device in the method 500 shown in FIG. 5 or the method 600 shown in FIG. 12 may be implemented by using the device 1800.

The device 1800 is, for example, a network device. For example, the device 1800 is a switch, a router, or the like. As shown in FIG. 19, the device 1800 includes a main control board 1801 and an interface board 1802.

The main control board 1801 is also referred to as a main processing unit (main processing unit, MPU) or a route processing card (route processor card). The main control board 1801 is configured to control and manage components in the device 1800, including route computation, device management, device maintenance, and protocol processing functions. The main control board 1801 includes a central processing unit 18011 and a memory 18012.

The interface board 1802 is also referred to as a line interface unit card (line processing unit, LPU), a line card (line card), or a service board. The interface board 1802 is configured to provide various service interfaces, and forward a data packet. The service interface includes but is not limited to an ethernet interface, a POS (Packet over SONET/SDH) interface, and the like. The ethernet interface is, for example, a flexible Ethernet service interface (Flexible Ethernet Clients, FlexE Clients). The interface board 1802 includes a central processing unit 18021, a network processor 18022, a forwarding entry memory 18023, and a physical interface card (physical interface card, PIC) 18024.

The central processing unit 18021 on the interface board 1802 is configured to control and manage the interface board 1802 and communicate with the central processing unit 18011 on the main control board 1801.

The network processor 18022 is configured to implement packet forwarding processing. A form of the network processor 18022 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 18022 is configured to forward a received packet based on a forwarding table stored in the forwarding entry memory 18023, and if a destination address of the packet is an address of the device 1800, the packet is sent to a CPU (for example, a central processing unit 18021) for processing. If the destination address of the packet is not the address of the device 1800, a next hop and an egress interface corresponding to the destination address are found in the forwarding table based on the destination address, and the packet is forwarded to the egress interface corresponding to the destination address. Processing on an uplink packet may include: processing at a packet ingress interface and forwarding table lookup, and processing on a downlink packet may include: forwarding table lookup and the like. In some embodiments, the central processing unit can also perform a function of the forwarding chip, for example, implement software forwarding based on a general-purpose CPU, so that the interface board does not need the forwarding chip.

The physical interface card 18023 is configured to implement an interconnection function at a physical layer. Original traffic enters the interface card 1802, and a processed packet is sent from the physical interface card 1802. The physical interface card 18023, also referred to as a subcard, may be installed on the interface board 1802, and is responsible for converting an optical/electrical signal into a packet, performing validity check on the packet, and forwarding the packet to the network processor 18022 for processing. In some embodiments, the central processing unit can also perform a function of the network processor 18022, for example, implement software forwarding based on a general CPU. Therefore, the network processor 18022 is not required in the physical interface card 18023.

Optionally, the device 1800 includes a plurality of interface boards. For example, the device 1800 further includes an interface board 1803. The interface board 1803 includes a central processing unit 18031, a network processor 18032, a forwarding entry memory 18033, and a physical interface card 18034. Functions and implementations of components in the interface board 1803 are the same as or similar to those of the interface board 1802, and details are not described herein again.

Optionally, the device 1800 further includes a switch fabric 1804. The switch fabric 1804 may also be referred to as a switch fabric unit (switch fabric unit, SFU). In a case in which the device 1800 has a plurality of interface boards, the switch fabric 1804 is configured to complete data exchange between the interface boards. For example, the interface board 1802 and the interface board 1803 may communicate with each other via the switch fabric 1804.

The main control board 1801 and the interface board 1802 are coupled. For example, the main control board 1801, the interface board 1802, the interface board 1803, and the switch fabric 1804 are connected to a system backboard by using a system bus for interconnection. In a possible implementation, an inter-process communication (inter-process communication, IPC) channel is established between the main control board 1801 and the interface board 1802, and the main control board 1801 and the interface board 1802 communicate with each other through an IPC channel.

Logically, the device 1800 includes a control plane and a forwarding plane. The control plane includes the main control board 1801 and a central processing unit. The forwarding plane includes components used for forwarding, for example, the forwarding entry memory 18023, the physical interface card 18024, and the network processor 18022. The control plane performs functions such as a function of a router, generating a forwarding table, processing signaling and a protocol packet, and configuring and maintaining a status of a device. The control plane delivers the generated forwarding table to the forwarding plane. On the forwarding plane, the network processor 18022 searches the forwarding table delivered by the control plane to forward a packet received by the physical interface card 18024. The forwarding table delivered by the control plane may be stored in the forwarding entry memory 18023. In some embodiments, the control plane and the forwarding plane may be completely separated, and are not on a same device.

It should be noted that there may be one or more main control boards 1801, and when there are a plurality of main control boards 1801, the main control board 1801 may include an active main control board and a standby main control board. There may be one or more interface boards, and the device 1800 has a stronger data processing capability and provides more interface boards. There may also be one or more physical interface cards on the interface board. There may be no switch fabric 1804, or there may be one or more switch fabrics 1804. When there are a plurality of switch fabrics 1804, load sharing and redundancy backup may be implemented together. In a centralized forwarding architecture, the device 1800 may not need a switch fabric, and an interface board provides a function of processing service data of an entire system. In a distributed forwarding architecture, the device 1800 may have at least one switch fabric 1804, and exchange data between a plurality of interface boards via the switch fabric 1804, to provide a large-capacity data exchange and processing capability. Therefore, a data access and processing capability of the device 1800 in the distributed architecture is better than that of the device in the centralized architecture. Optionally, the device 1800 may alternatively be in a form in which there is only one board card. To be specific, there is no switch fabric, and functions of the interface board and the main control board are integrated on the board card. In this case, the central processing unit on the interface board and the central processing unit on the main control board may be combined to form one central processing unit on the board card, to perform functions obtained by combining the two central processing units. This form of device (for example, a network device such as a low-end switch or a router) has a weak data exchange and processing capability. A specific architecture that is to be used depends on a specific networking deployment scenario. This is not limited herein.

Referring to FIG. 20, an embodiment of this application provides a capability obtaining system 1900. The system 1900 includes the apparatus 1300 shown in FIG. 14 and the apparatus 1400 shown in FIG. 15, or the system 1900 includes the apparatus 1500 shown in FIG. 16 and the apparatus 1600 shown in FIG. 17, or the system 1900 includes the device 1700 shown in FIG. 18 and the device 1800 shown in FIG. 19.

The apparatus 1300 shown in FIG. 14, or the apparatus 1500 shown in FIG. 16, or the device 1700 shown in FIG. 18 is a first device 1901. The apparatus 1400 shown in FIG. 15, or the apparatus 1600 shown in FIG. 17, or the device 1800 shown in FIG. 19 is a first network device 1902.

A person of ordinary skill in the art can understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are only optional embodiments of this application, but are not intended to limit this application. Any modification, equivalent replacement, or improvement made within the principle of this application should fall within the protection scope of this application.

## Claims

1. A capability obtaining method, wherein the method comprises:
receiving, by a first device, a first packet, wherein the first packet comprises first capability information, and the first capability information indicates a processing capability of a first network device for an option in a packet header of an internet protocol version 6 IPv6 packet; and
determining, by the first device, the processing capability of the first network device based on the first capability information.

2. The method according to claim 1, wherein the method further comprises:
sending, by the first device, a second packet based on the processing capability of the first network device, wherein the second packet is an IPv6 packet.

3. The method according to claim 2, wherein the sending, by the first device, a second packet based on the processing capability of the first network device comprises:
sending, by the first device, the second packet to the first network device based on the processing capability of the first network device.

4. The method according to claim 3, wherein a packet header of the second packet comprises at least one first option, and the at least one first option is an option that the first network device is capable of processing.

5. The method according to claim 3, wherein the packet header of the second packet comprises at least one second option, the at least one second option is an intersection set of options that a plurality of network devices on a forwarding path of the second packet are capable of processing, and the plurality of network devices comprise the first network device.

6. The method according to claim 3, wherein a packet header of the second packet comprises a third option and a fourth option, the first network device is capable of processing the third option, the first network device is incapable of processing the fourth option, a second network device on a forwarding path of the second packet is capable of processing the fourth option, and the second network device is different from the first network device.

7. The method according to claim 2, wherein the sending, by the first device, a second packet based on the processing capability of the first network device comprises:
determining, by the first device based on the processing capability of the first network device, a path for transmission of the second packet.

8. The method according to claim 7, wherein
the determined path passes through the first network device, and the first network device is capable of processing all options in a packet header of the second packet;
the determined path passes through the first network device, and the first network device is capable of processing at least one option in a packet header of the second packet; or
the determined path does not pass through the first network device, and the first network device is incapable of processing at least one option in a packet header of the second packet.

9. The method according to any one of claims 1 to 8, wherein before the receiving, by a first device, a first packet, the method further comprises:
sending, by the first device, a first capability information collection packet to the first network device, wherein the first packet is generated based on the first capability information collection packet.

10. The method according to claim 9, wherein the method further comprises:
sending, by the first device, a second capability information collection packet to a third network device; and
obtaining, by the first device, second capability information, wherein the second capability information indicates a processing capability of the third network device.

11. The method according to claim 9, wherein the first capability information collection packet passes through the first network device and a third network device, the first packet further comprises capability information of the third network device, and the capability information of the third network device indicates a processing capability of the third network device.

12. The method according to claim 9, wherein the first capability information collection packet passes through the first network device and a third network device;
that the first capability information indicates the processing capability of the first network device comprises:
the first capability information indicates an intersection set of the processing capability of the first network device and the processing capability of the third network device.

13. The method according to any one of claims 9 to 12, wherein the first capability information collection packet comprises an option set, and the first capability information indicates a processing capability of the first network device for each option in the option set.

14. The method according to any one of claims 1 to 13, wherein the first device comprises a device or a controller that encapsulates an IPv6 packet header.

15. The method according to any one of claims 1 to 14, wherein the first packet is generated by any one of the following devices: a controller, the first network device, a network edge device corresponding to the first network device, or a management device corresponding to the first device.

16. The method according to any one of claims 1 to 15, wherein a packet header of the IPv6 packet comprises an IPv6 extension header, and the IPv6 extension header comprises one or more of the following: a hop-by-hop options header HBH, a destination options header DOH, or a segment routing header SRH.

17. The method according to any one of claims 1 to 16, wherein the first capability information comprises at least one first option, and the first network device is capable of processing the at least one first option.

18. The method according to any one of claims 1 to 17, wherein the processing capability comprises one or more of the following capabilities:
a type of an option that the first network device is capable of processing, a maximum quantity of options that the first network device is capable of processing, a processing operation that the first network device is capable of performing on a target option, a processing operation that the first network device is capable of performing on a packet that comprises a target option, or a processing operation that the first network device is capable of performing on a packet that does not comprise a target option.

19. The method according to any one of claims 1 to 18, wherein the first packet comprises a type length value TLV field, and the TLV field comprises the first capability information.

20. The method according to any one of claims 1 to 19, wherein the first packet is a control packet or a data packet.

21. The method according to any one of claims 1 to 20, wherein a communication protocol used for the first packet comprises any one of the following: a border gateway protocol-link state BGP-LS, an interior gateway protocol IGP, a path computation element protocol PCEP, and a network configuration protocol NETCONF.

22. A capability information sending method, wherein the method comprises:
sending, by a first network device, a first packet, wherein the first packet comprises first capability information, and the first capability information indicates a processing capability of the first network device for an option field in a packet header of an internet protocol version 6 IPv6 packet.

23. The method according to claim 22, wherein the method further comprises:
receiving, by the first network device, a first capability information collection packet; and
generating, by the first network device, the first packet based on the first capability information collection packet.

24. The method according to claim 23, wherein the first capability information collection packet comprises an option set, and
that the generating, by the first network device, the first packet based on the first capability information collection packet comprises:
generating, by the first network device, the first packet based on a processing capability of the first network device for each option in the option set, wherein the first capability information indicates the processing capability of the first network device for each option in the option set.

25. The method according to any one of claims 22 to 24, wherein the method further comprises:
receiving, by the first network device, a second packet, wherein the second packet comprises second capability information, and the second capability information indicates a processing capability of a second network device for an option field in a packet header of an IPv6 packet; and
generating, by the first network device, the first packet based on the second packet;
wherein the first packet further comprises the second capability information, or the first capability information indicates an intersection set of a processing capability of the first network device for the option field in the packet header of the IPv6 packet and the processing capability of the second network device for the option field in the packet header of the IPv6 packet.

26. The method according to any one of claims 22 to 24, wherein the method further comprises:
determining, by the first network device, the first capability information based on at least one first option that the first network device is capable of processing, wherein the first capability information comprises the at least one first option.

27. The method according to any one of claims 22 to 26, wherein the processing capability comprises one or more of the following capabilities:
a type of an option that the first network device is capable of processing, a maximum quantity of options that the first network device is capable of processing, a processing operation that the first network device is capable of performing on a target option, a processing operation that the first network device is capable of performing on a packet that comprises a target option, or a processing operation that the first network device is capable of performing on a packet that does not comprise a target option.

28. The method according to any one of claims 22 to 27, wherein the first packet comprises a type length value TLV field, and the TLV field comprises the first capability information.

29. The method according to any one of claims 22 to 28, wherein the first packet is a control packet or a data packet.

30. The method according to any one of claims 22 to 29, wherein a communication protocol used for the first packet comprises any one of the following: a border gateway protocol-link state BGP-LS, an interior gateway protocol IGP, a path computation element protocol PCEP, and a network configuration protocol NETCONF.

31. The method according to any one of claims 22 to 30, wherein a packet header of the IPv6 packet comprises an IPv6 extension header, and the IPv6 extension header comprises one or more of the following: a hop-by-hop options header HBH, a destination options header DOH, or a segment routing header SRH.

32. A capability obtaining apparatus, wherein the apparatus comprises:
a processor and a memory, wherein the memory is configured to store a program, and the processor is configured to execute the program stored in the memory, so that the apparatus completes the method according to any one of claims 1 to 21.

33. A capability information sending apparatus, wherein the apparatus comprises:
a processor and a memory, wherein the memory is configured to store a program, and the processor is configured to execute the program stored in the memory, so that the apparatus completes the method according to any one of claims 22 to 31.

34. A capability obtaining method, wherein the method comprises:
sending, by a first network device, a first packet, wherein the first packet comprises first capability information, and the first capability information indicates a processing capability of the first network device for an option field in a packet header of an internet protocol version 6 IPv6 packet;
receiving, by the first device, the first packet; and
determining, by the first device, the processing capability of the first network device based on the first capability information in the first packet.

35. A capability obtaining system, wherein the system comprises a first network device and a first device; and
the first network device is configured to send a first packet, wherein the first packet comprises first capability information, and the first capability information indicates a processing capability of the first network device for an option field in a packet header of an internet protocol version 6 IPv6 packet; and
the first device is configured to: receive the first packet; and determine the processing capability of the first network device based on the first capability information.

36. A capability obtaining system, wherein the system comprises a first device and a first network device, wherein the first device is configured to perform the method according to any one of claims 1 to 21, and the first network device is configured to perform the method according to any one of claims 22 to 31.

37. A computer-readable storage medium, wherein the computer-readable storage medium stores a computer program, and when the computer program is executed by a computer, implements the method according to any one of claims 1 to 31.

38. A computer program product, wherein the computer program product comprises a computer program stored in a computer-readable storage medium, and the computer program is loaded by a processor to implement the method according to any one of claims 1 to 31.
